# EUROPÄISCHE PATENTSCHRIFT

(11) **EP 2 312 988 B1**
(45) Veröffentlichungstag und Bekanntmachung des Hinweises auf die Patenterteilung: **07.09.2016**
(21) Anmeldenummer: 09781149.1
(22) Anmeldetag: 28.07.2009
(51) Int. Cl.: A47L 15/48, A47L 15/42

(54) **GESCHIRRSPÜLMASCHINE MIT SORPTIONSTROCKENVORRICHTUNG**
DISHWASHER MACHINE COMPRISING A SORPTION DRYING DEVICE
LAVE-VAISSELLE PRÉSENTANT UN DISPOSITIF DE SÉCHAGE PAR SORPTION

(30) Priorität: 28.07.2008 DE 102008040789; 27.08.2008 DE 102008039892
(43) Veröffentlichungstag der Anmeldung: 27.04.2011
(73) Patentinhaber: BSH Hausgeräte GmbH, 81739 München (DE)
(72) Erfinder: JERG, Helmut, 89537 Giengen (DE); PAINTNER, Kai, 86477 Adelsried (DE)
(86) Internationale Anmeldenummer: PCT/EP2009/059695
(87) Internationale Veröffentlichungsnummer: WO 2010/012700

(56) Entgegenhaltungen:
- EP-A- 0 358 279
- WO-A-2005/053504
- WO-A-2006/061281
- WO-A-2006/061293
- DE-A1- 3 626 887
- DE-A1-102005 004 096

## Beschreibung

Die vorliegende Erfindung betrifft eine Geschirrspülmaschine, insbesondere Haushaltsgeschirrspülmaschine, mit mindestens einem Spülbehälter und mindestens einem Sorptionstrocknungssystem zum Trocknen von Spülgut, wobei das Sorptionstrocknungssystem mindestens einen Sorptionsbehälter mit reversibel dehydrierbarem Sorptionsmaterial aufweist, der über mindestens einen Luftführungskanal mit dem Spülbehälter zur Erzeugung einer Luftströmung verbunden ist, wobei das Sorptionsmaterial im Sorptionsbehälter derart in Form einer Sorptionseinheit gelagert ist, dass im Wesentlichen jede Eintrittsstelle der Durchtrittsquerschnittsfläche der Sorptionseinheit mit einem im Wesentlichen gleichen Luftvolumenstromwert beaufschlagbar ist, und wobei in Durchströmungsrichtung des Sorptionsbehälters betrachtet vor dessen Sorptionseinheit mindestens eine Heizungseinrichtung vorgesehen ist,

Z.B. aus der DE 103 53 774 A1, der DE 103 53 775 A1 oder der DE 10 2005 004 096 A1 sind Geschirrspülmaschinen mit einer sogenannten Sorptionskolonne zur Trocknung von Geschirr bekannt. Dabei wird im Teilprogrammschritt "Trocknen" des jeweiligen Geschirrspülprogramms der Geschirrspülmaschine zum Trocknen von Geschirr feuchte Luft aus dem Spülbehälter der Geschirrspülmaschine mittels eines Gebläses durch die Sorptionskolonne geleitet und durch deren reversibel dehydrierbares Trockenmaterial durch Kondensation Feuchtigkeit aus der hindurchgeführten Luft entzogen. Zur Regenerierung, d.h. Desorption der Sorptionskolonne wird deren reversibel dehydrierbares Trockenmaterial auf sehr hohe Temperaturen erhitzt. In diesem Material gespeichertes Wasser tritt dadurch als heißer Wasserdampf aus und wird durch eine mittels des Gebläses erzeugte Luftströmung in den Spülbehälter geleitet. Hierdurch kann eine Spülflotte und/oder ein in dem Spülbehälter befindliches Geschirr sowie die im Spülbehälter befindliche Luft erwärmt werden. Eine derartige Sorptionkolonne hat sich für eine energiesparende und leise Trocknung des Geschirrs als sehr vorteilhaft erwiesen. Zur Vermeidung lokaler Überhitzungen des Trockenmaterials beim Desorptionsvorgang ist z.B. bei der DE 10 2005 004 096 A1 eine Heizung in Strömungsrichtung der Luft vor dem Lufteinlass der Sorptionskolonne angeordnet. Trotz dieser "Luftheizung" bei der Desorption bleibt es in der Praxis schwierig, das reversibel dehydrierbare Trockenmaterial stets ausreichend und einwandfrei zu trocknen.

Der Erfindung liegt die Aufgabe zugrunde, eine Geschirrspülmaschine, insbesondere Haushaltsgeschirrspülmaschine, mit einem weiter verbessertem Sorptions- und/oder Desorptionsergebnis für das reversibel dehydrierbare Trockenmaterial der Sorptionseinheit einer Sorptionstrocknungsvorrichtung bereitzustellen.

Diese Aufgabe wird bei einer Geschirrspülmaschine, insbesondere Haushaltsgeschirrspülmaschine, der eingangs genannten Art dadurch gelöst, dass ein oder mehrere Strömungskonditionierungselemente derart im Sorptionsbehälter und/oder in einem eingangsseitigen Rohrabschnitt des Luftführungskanals vorgesehen sind, dass eine Vergleichmäßigung des örtlichen Strömungsquerschnittsprofils der Luftströmung beim Durchströmen des Sorptionsbehälters in dessen Durchströmungsrichtung bewirkt ist, wobei in Durchströmungsrichtung des Sorptionsbehälters betrachtet in dessen unterem Hohlraum mindestens ein Strömungskonditionierungselement mit Höhenabstand vor der Heizungseinrichtung vorgesehen ist, und wobei Luftdurchlässe, insbesondere Schlitze, im Strömungskonditionierungselement an denjenigen Orten, an denen die in den Sorptionsbehälter eintretende Luftströmung in Durchströmungsrichtung des Sorptionsbehälters eine geringere Geschwindigkeit aufweist, größer als an denjenigen Orten ausgebildet ist, an denen die in den Sorptionsbehälter eintretende Luftströmung in Durchströmungsrichtung des Sorptionsbehälters eine größere Geschwindigkeit aufweist.

Dadurch ist weitgehend sichergestellt, dass Spülgut im Spülbehälter einwandfrei, energieeffizient und zuverlässig getrocknet werden kann. Darüber hinaus ist eine kompakte Unterbringung der Trocknungseinrichtung in der Geschirrspülmaschine ermöglicht.

Insbesondere ist weitgehend sichergestellt, dass feuchte Luft, die beim jeweilig gewünschten Trocknungsvorgang über den Luftführungskanal aus dem Spülbehälter in den Sorptionsbehälter geführt ist und dessen Sorptionseinheit mit dem Sorptionstrocknungsmaterial durchströmt, durch Sorption mittels des Sorptionstrocknungsmaterial einwandfrei, zuverlässig und energieeffizient getrocknet werden kann. Später nach diesem Trocknungsvorgang, z.B. bei mindestens einem Spül- oder Reinigungsvorgang eines späteren, neu gestarteten Geschirrspülprogramms, kann das Sorptionsmaterial zur Aufbereitung für einen nachfolgenden Trocknungsvorgang einwandfrei, energieeffizient und materialschonend wieder durch Desorption regeneriert, d.h. aufbereitet werden.

Sonstige Weiterbildungen der Erfindung sind in den Unteransprüchen wiedergegeben.

Die Erfindung und ihre Weiterbildungen werden nachfolgend anhand von Zeichnungen näher erläutert.

Es zeigen:
- Fig. 1: schematisch eine Geschirrspülmaschine mit einem Spülbehälter und einem Sorptionstrocknungssystem, dessen Komponenten nach dem erfindungsgemäßen Konstruktionsprinzip ausgebildet sind,
- Fig. 2: schematisch in perspektivischer Darstellung den geöffneten Spülbehälter der Geschirrspülmaschine von Figur 1 mit Komponenten des Sorptionstrocknungssystems, die teilweise freigelegt, d.h. ohne Abdeckung eingezeichnet sind,
- Fig. 3: in schematischer Seitenansicht die Gesamtheit des Sorptionstrocknungssystems von Figur 1, 2, deren Komponenten teilweise außen an einer Seitenwand des Spülbehälters sowie teilweise in einer Bodenbaugruppe unterhalb des Spülbehälters untergebracht sind,
- Fig. 4: als Einzelheit schematisch in perspektivischer Explosionsdarstellung verschiedene Bauteile des Sorptionsbehälters der Sorptionstrocknungsvorrichtung der Figuren 1 mit 3,
- Fig. 5: schematisch in Draufsicht den Sorptionsbehälter von Figur 4,
- Fig. 6: in schematischer Draufsicht von unten betrachtet als Bauteil des Sorptionsbehälters von Figur 5 ein Schlitzblech zur Strömungskonditionierung von Luft, die Sorptionsmaterial im Sorptionsbehälter durchströmt,
- Fig. 7: in schematischer Draufsicht von unten betrachtet als weitere Einzelheit des Sorptionsbehälters von Figur 4 eine Rohrschlangenheizung zum Aufheizen von Sorptionsmaterial im Sorptionsbehälter zu dessen Desorption,
- Fig. 8: in schematischer Draufsichtsdarstellung von oben betrachtet die Rohrschlangenheizung von Figur 7, die oberhalb dem Schlitzblech von Figur 6 angeordnet ist,
- Fig. 9: in schematischer Schnittdarstellung von der Seite her betrachtet den Sorptionsbehälter der Figuren 4, 5,
- Fig. 10: in schematischer Perspektivdarstellung den Innenaufbau des Sorptionsbehälters der Figuren 4, 5, 9 im teilweise aufgeschnittenen Zustand,
- Fig. 11: in schematischer Draufsichtsdarstellung von oben betrachtet die Gesamtheit der Komponenten des Sorptionstrocknungssystems der Figuren 1 bis 10,
- Fig. 12 mit 14: schematisch in verschiedenen Ansichten das Auslasselement des Sorptionstrocknungssystems der Figuren 1 mit 3 als Einzelheit,
- Fig. 15: in schematischer Schnittdarstellung von der Seite her betrachtet das Einlasselement des Sorptionstrocknungssystems der Figuren 1 mit 3 als Einzelheit,
- Fig. 16: in schematischer Draufsichtsdarstellung von oben betrachtet die Bodenbaugruppe der Geschirrspülmaschine von Figur 1 sowie Figur 2, und
- Fig. 17: in schematischer Darstellung die thermoelektrische Hitzeabsicherung des Sorptionsbehälters der Figuren 4 mit 10 des Sorptionstrockungssystems der Figuren 1 mit 3, 11.

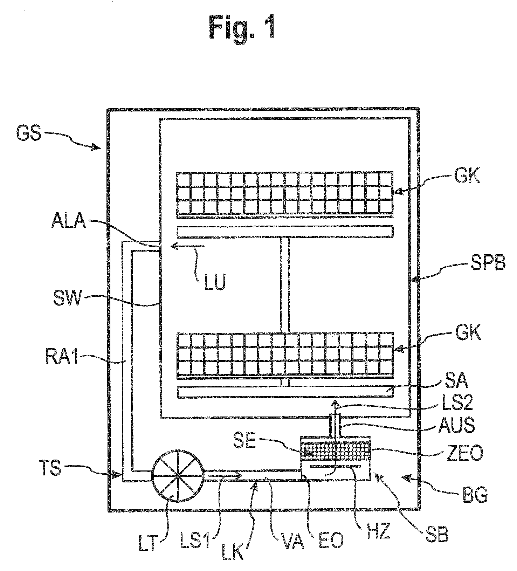

Elemente mit gleicher Funktion und Wirkungsweise sind in den Figuren 1 mit 17 jeweils mit denselben Bezugszeichen versehen.

Figur 1 zeigt in schematischer Darstellung eine Geschirrspülmaschine GS, die als Hauptkomponenten einen Spülbehälter SPB, eine darunter angeordnete Bodenbaugruppe BG sowie ein Sorptionstrocknungssystem TS nach dem erfindungsgemäßen Konstruktionsprinzip aufweist. Das Sorptionstrocknungssystem TS ist vorzugsweise extern, d. h. außerhalb des Spülbehälters SPB teils an einer Seitenwand SW sowie teils in der Bodenbaugruppe BG vorgesehen. Es umfasst als Hauptbestandteile mindestens einen Luftführungskanal LK, mindestens eine in diesem eingefügte Lüftereinheit bzw. ein Gebläse LT sowie mindestens einen Sorptionsbehälter SB. Im Spülbehälter SB sind vorzugsweise ein oder mehrere Gitterkörbe GK zur Aufnahme und zum Spülen von Spülgut wie z. B. Geschirrstücken untergebracht. Zum Besprühen des zu reinigenden Spülguts mit einer Flüssigkeit sind ein oder mehrere Sprüheinrichtungen wie z.B. ein oder mehrere rotierende Sprüharme SA im Inneren des Spülbehälters SPB vorgesehen. Hier im Ausführungsbeispiel ist im Spülbehälter SPB sowohl ein unterer Sprüharm als ein oberer Sprüharm rotierend aufgehängt.

Zur Reinigung von Spülgut durchlaufen Geschirrspülmaschinen Spülprogramme, die eine Mehrzahl von Programmschritten aufweisen. Das jeweilige Spülprogramm kann insbesondere folgende, zeitlich nacheinander ablaufende Einzel-Programmschritte umfassen: einen Vorspülschritt zur Entfernung grober Anschmutzungen, einen Reinigungsschritt mit Reinigungsmittelzugabe zu Flüssigkeit bzw. Wasser, einen Zwischenspülschritt, einen Klarspülschritt mit Aufbringen von mit Entspannungsmitteln bzw. Klarspüler versetzter Flüssigkeit bzw. Wasser, sowie einen abschließenden Trocknungsschritt, bei dem das gereinigte Spülgut getrocknet wird. Je nach Reinigungsschritt bzw. Spülvorgang eines gewählten Geschirrspülprogramms wird dabei mit Reiniger versetztes Frischwasser und/oder Brauchwasser z.B. für einen Reinigungsvorgang, für einen Zwischenspülgang, und/oder für einen Klarspülvorgang auf das jeweilig zu spülende Spülgut aufgebracht.

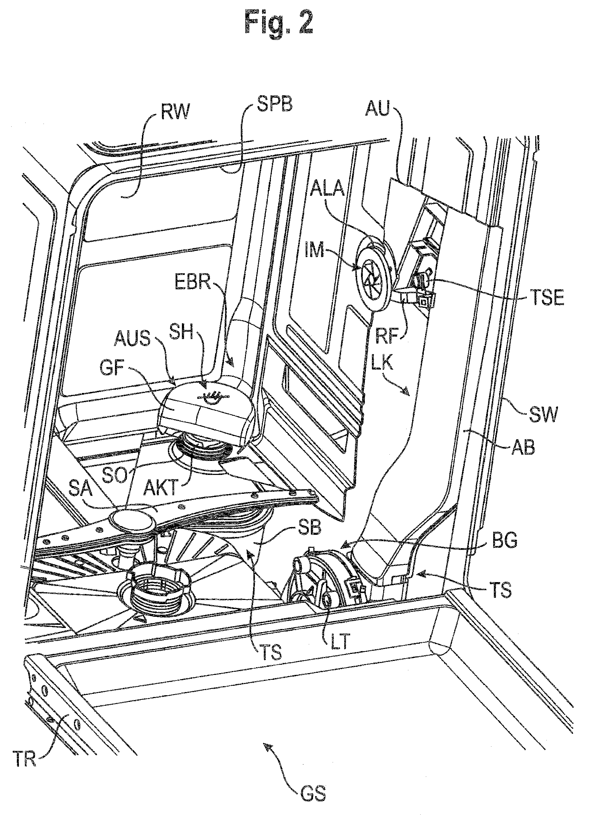

Die Lüftereinheit LT sowie der Sorptionsbehälter SB sind hier im Ausführungsbeispiel in der Bodenbaugruppe BG unterhalb des Bodens BO des Spülbehälters SPB untergebracht. Der Luftführungskanal LK verläuft von einer Auslassöffnung ALA, die oberhalb des Bodens BO des Spülbehälters SBP in dessen Seitenwand SW vorgesehen ist, außen an dieser Seitenwand SW mit einem einlassseitigen Rohrabschnitt RA1 nach unten zur Lüftereinheit LT in der Bodenbaugruppe BG. Über einen Verbindungsabschnitt VA des Luftführungskanals LK ist der Ausgang der Lüftereinheit LT mit einer Eintrittsöffnung EO des Sorptionsbehälters SB in dessen bodennahem Bereich verbunden. Die Auslassöffnung ALA des Spülbehälters SPB ist oberhalb dessen Bodens BO vorzugsweise im Mittenbereich bzw. im Zentralbereich der Seitenwand SW zum Ansaugen von Luft aus dem Inneren des Spülbehälters SPB vorgesehen. Alternativ dazu ist es selbstverständlich auch möglich, die Auslassöffnung ALA in der Rückwand RW (siehe Figur 2) des Spülbehälters SPB anzubringen. Allgemein ausgedrückt ist es insbesondere vorteilhaft, die Auslassöffnung vorzugsweise zumindest oberhalb eines Schaumpegels, bis zu dem sich Schaum bei einem Reinigungsvorgang bilden kann, bevorzugt in der oberen Teilhälfte des Spülbehälters SPB in einer dessen Seitenwände SW und/oder Rückwand vorzusehen. Zweckmäßig kann es gegebenenfalls auch sein, mehrere Auslassöffnungen in mindestens einer Seitenwand, Deckenwand, und/oder der Rückwand des Spülbehälters SPB einzulassen und diese mit mindestens einem Luftführungskanal mit ein oder mehreren Einlassöffnungen im Gehäuse des Sorptionsbehälters SB vor dem Beginn bzw. Anfang dessen Sorptionsmaterialstrecke zu verbinden.

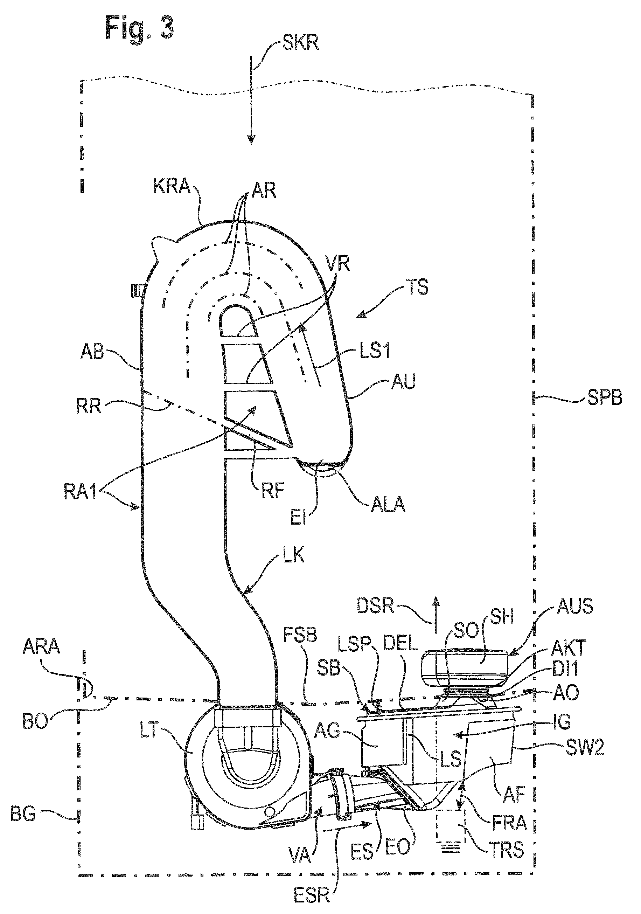

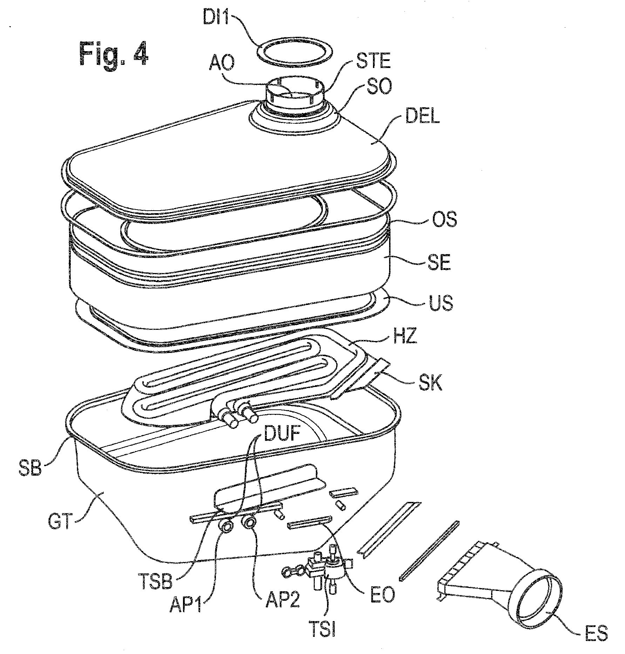

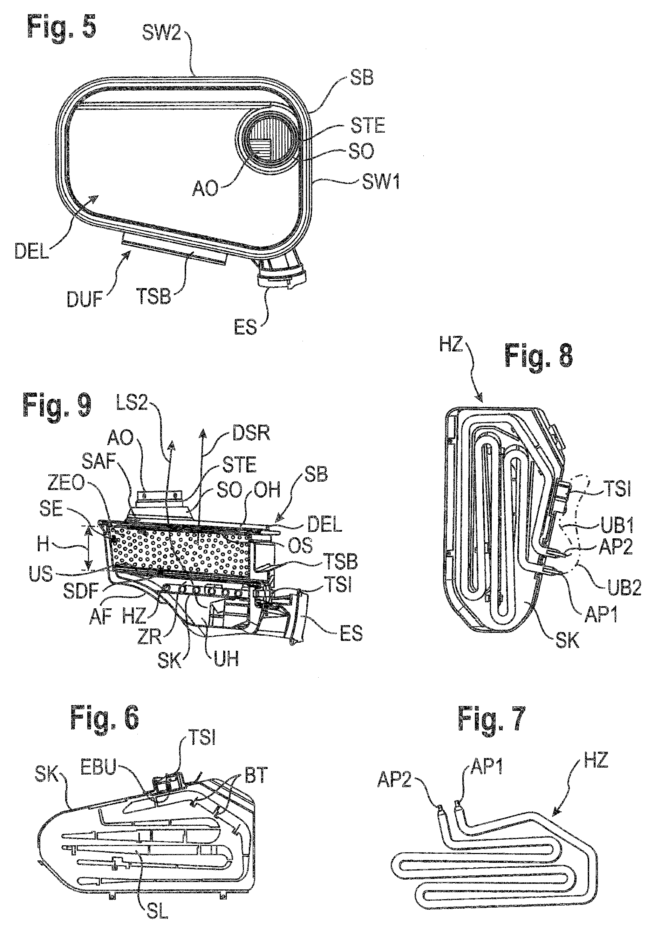

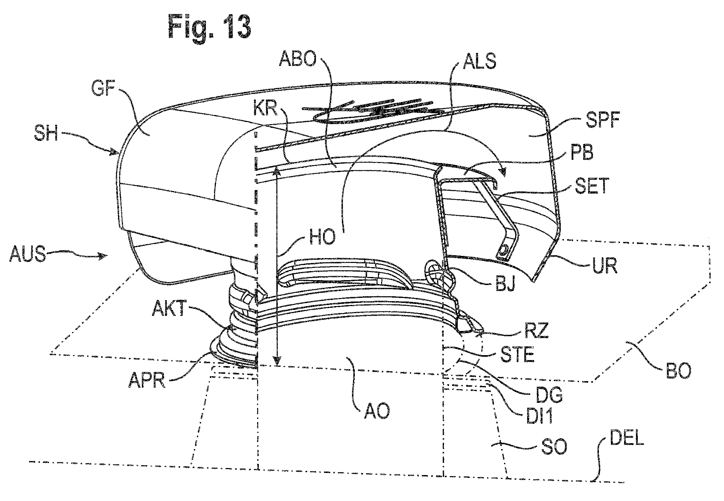

Die Lüftereinheit LT ist vorzugsweise als Axiallüfter ausgebildet. Sie dient der Zwangsbeströmung einer Sorptionseinheit SE im Sorptionsbehälter SB mit feucht-heißer Luft LU aus dem Spülbehälter SPB. Die Sorptionseinheit SE enthält reversibel dehydrierbares Sorptionsmaterial ZEO, das Feuchtigkeit aus der durch sie hindurchgeleiteten Luft LU aufnehmen und speichern kann. Der Sorptionsbehälter SB weist im deckennahen Bereich seines Gehäuses auf der Oberseite eine Ausströmöffnung AO (siehe Figuren 4, 5) auf, die über ein Auslasselement AUS durch eine Durchstecköffnung DG (siehe Figur 13) im Boden BO des Spülbehälters SPB mit dessen Inneren verbunden ist. Auf diese Weise kann während eines Trocknungsschritts eines Geschirrspülprogramms zum Trocknen von gereinigtem Spülgut feucht- heiße Luft LU aus dem Inneren des Spülbehälters SPB durch die Auslassöffnung ALA hindurch mittels der eingeschalteten Lüftereinheit LT in den einlassseitigen Rohrabschnitt RA1 des Luftführungskanals LK angesaugt werden und über den Verbindungsabschnitt VA in das Innere des Sorptionsbehälters SB zur Zwangsbeströmung des reversibel dehydrierbarem Sorptionsmaterials ZEO in der Sorptionseinheit SE transportiert werden. Das Sorptionsmaterial ZEO der Sorptionseinheit SE zieht aus der durchströmenden, feuchten Luft Wasser heraus, so dass nach der Sorptionseinheit SE getrocknete Luft über das Auslasselement bzw. Ausblaselement AUS in das Innere des Spülbehälters SPB eingeblasen werden kann. Auf diese Weise ist ein geschlossenes Luftzirkulationssystem durch dieses Sorptionstrocknungssystem TS bereitgestellt. Die räumliche Anordnung der verschiedenen Komponenten dieses Sorptionstrocknungssystems TS geht aus der schematischen Perspektivdarstellung von Figur 2 sowie der schematischen Seitenansicht von der Figur 3 hervor. In der Figur 3 ist der Verlauf des Bodens BO zusätzlich strichpunktiert eingezeichnet, wodurch die räumlich-geometrischen Verhältnisse des Aufbaus des Sorptionstrocknungssystems TS besser veranschaulicht sind.

Die Auslassöffnung ALA ist vorzugsweise an einer Stelle oberhalb des Bodens BO angeordnet, die das Einsammeln bzw. Ansaugen von möglichst viel feucht-heißer Luft LU aus der oberen Teilhälfte des Spülbehälters SPB in den Luftführungskanal LK ermöglicht. Denn nach einem Reinigungsvorgang, insbesondere Klarspülvorgang mit aufgeheizter Flüssigkeit, sammelt sich feuchtheiße Luft vorzugsweise oberhalb des Bodens BO, insbesondere in der oberen Hälfte des Spülbehälters SPB. Die Auslassöffnung ALA liegt vorzugsweise in einer Höhenlage oberhalb des Pegels von Schaum, der beim regulären Spülbetrieb oder im Störfall auftreten kann. Insbesondere kann Schaum durch Reinigungsmittel im Wasser beim Reinigungsvorgang hervorgerufen werden. Zum anderen ist die Position der Austrittsfelle bzw. Auslassöffnung ALA derart gewählt, dass für den einlassseitigen Rohrabschnitt RA1 des Luftführungskanals LK noch eine ansteigende Wegstrecke an der Seitenwand SW frei zur Verfügung steht. Durch die Austrittsöffnung bzw. Auslassöffnung im Mittenbereich, Deckenbereich, und/oder oberen Bereich der Seitenwand SW und/oder Rückwand RW des Spülbehälters SPB ist zudem weitgehend vermieden, dass Wasser aus dem Sumpf im Boden des Spülbehälters oder aus dessen Flüssigkeitsprühsystem durch die Auslassöffnung ALA des Spülbehälters SPB direkt in den Luftführungskanal LK eingespritzt und anschließend in den Sorptionsbehälter SB hineingelangen kann, was dort ansonsten dessen Sorptionsmaterial ZEO unzulässig feucht, teilweise beschädigen oder unbrauchbar machen, oder gar ganz zerstören könnte.

Im Sorptionsbehälter SB ist in Strömungsrichtung betrachtet vor dessen Sorptionseinheit SE mindestens eine Heizungseinrichtung HZ zur Desorption und damit Regenerierung des Sorptionsmaterials ZEO angeordnet. Die Heizungseinrichtung HZ dient zur Aufheizung von Luft LU, die mittels der Lüftereinheit LT durch den Luftführungskanal LK in den Sorptionsbehälter hindurchgetrieben wird. Diese zwangsaufgeheizter Luft nimmt die gespeicherte Feuchtigkeit, insbesondere Wasser, aus dem Sorptionsmaterial ZEO beim Durchströmen durch das Sorptionsmaterial ZEO auf. Dieses aus dem Sorptionsmaterial ZEO ausgetriebene Wasser wird durch die aufgeheizte Luft über das Auslasselement AUS des Sorptionsbehälters SB in das Innere des Spülbehälters transportiert. Dieser Desorptionsvorgang findet vorzugsweise dann statt, wenn die Erwärmung von Flüssigkeit für einen Reinigungsvorgang oder sonstigen Spülvorgang eines nachfolgenden Geschirrspülprogramms gewünscht oder durchgeführt wird. Dabei kann die für den Desorptionsvorgang durch die Heizungseinrichtung HZ erhitzte Luft gleichzeitig zur Erhitzung der Flüssigkeit im Spülbehälter SPB allein oder unterstützend zur einer herkömmlichen Wasserheizung herangezogen werden, was energiesparend ist.

Figur 2 zeigt bei geöffneter Tür TR der Geschirrspülmaschine GS von Figur 1 Hauptkomponenten des Sorptionstrocknungssystem TS in der Seitenwand SW sowie der Bodenbaugruppe BG teilweise im frei gelegten Zustand in perspektivischer Darstellung. Die Figur 3 zeigt passend dazu die Gesamtheit der Komponenten des Sorptionstrocknungssystems TS von der Seite her betrachtet. Der einlassseitige Rohrabschnitt RA1 des Luftführungskanals LK weist ausgehend von der Höhenposition seiner Einlassöffnung El am Ort der Auslassöffnung ALA des Spülbehälters SPB einen bezüglich der Schwerkraftrichtung nach oben ansteigenden Rohrabschnitt AU und danach einen bezüglich der Schwerkraftrichtung SKR nach unten abfallenden Rohrabschnitt AB auf. Der nach oben ansteigende Rohrabschnitt AU verläuft etwas gegenüber der vertikalen Schwerkraftrichtung SKR geneigt nach oben und geht in einen Krümmungsabschnitt KRA über, der konvex gebogen ist und für den einströmenden Luftstrom LS1 eine Richtungsumkehr um etwa 180 ° nach unten in den sich daran anschließenden, im Wesentlichen vertikal nach unten abfallenden Rohrabschnitt AB erzwingt. Dieser endet in der Lüftereinheit LT. Der erste, nach oben aufsteigende Rohrabschnitt AU, der Krümmungsabschnitt KRA, sowie der nachgeordnete, zweite, nach unten abfallende Rohrabschnitt AB bilden einen Flachkanal mit einer im Wesentlichen flach rechteckförmigen Querschnittsgeometrieform.

Im Inneren des Krümmungsabschnitts KRA sind ein oder mehrere Strömungsleitrippen bzw. Ablaufrippen AR vorgesehen, die dessen Krümmungsverlauf nachfolgen. Im Ausführungsbeispiel sind mehrere bogenförmige Ablaufrippen AR im Wesentlichen konzentrisch ineinander geschachtelt sowie mit Querabstand zueinander im Inneren des Krümmungsabschnitts KRA angeordnet. Sie erstrecken sich hier im Ausführungsbeispiel auch in den ansteigenden Rohrabschnitt AU sowie in den abfallenden Rohrabschnitt AB auf einer Teillänge hinein. Diese Ablaufrippen AR sind in Höhenpositionen oberhalb des Auslasses ALA des Spülbehälters SPB bzw. des Einlasses El des einlassseitigen Rohrabschnitts RA1 des Luftführungskanals LK angeordnet. Diese Ablaufrippen AR dienen dazu, Flüssigkeitströpfchen und/oder Kondensat aus der aus dem Spülbehälter SPB angesaugten Luftströmung LS1 aufzunehmen. Im Abschnittsbereich des nach oben ansteigenden Rohrabschnitts AU können die an den Strömungsleitrippen AR gesammelten Flüssigkeitströpfchen in Richtung des Auslasses ALA abtropfen. Im Bereich des nach unten abfallenden Rohrabschnitts AB können die Flüssigkeitströpfchen von den Strömungsleitrippen AR in Richtung auf eine Rücklaufrippe RR abtropfen. Die Rücklaufrippe RR ist dabei an einer Stelle im Inneren des abfallenden Rohrabschnitts AB vorgesehen, die höher als die Auslassöffnung ALA des Spülbehälters SPB bzw. die höher als die Einlassöffnung El des Luftführungskanals LK liegt. Die Rücklaufrippe RR im Inneren des abfallenden Rohrabschnitts AB bildet dabei eine Ablaufschräge und fluchtet mit einer Querverbindungsleitung RF in Richtung auf den Auslass ALA des Spülbehälters SPB zu. Die Querverbindungsleitung RF überbrückt dabei den Zwischenraum zwischen dem Schenkel des nach oben ansteigenden Rohrabschnitts AU und dem Schenkel des nach unten abfallenden Rohrabschnitts AB. Die Querverbindungsleitung RF verbindet dabei das Innere des nach oben ansteigenden Rohrabschnitts AU sowie das Innere des nach unten abfallenden Rohrabschnitts AB miteinander. Das Gefälle der Rücklaufrippe RR sowie der sich daran anschließenden, fluchtenden Querverbindungsleitung RF ist derart gewählt, dass eine Kondensatrückführung von Kondenswasser- oder sonstigen Flüssigkeitströpfchen, die von den Ablaufrippen AR im Bereich des abfallenden Rohrabschnitts AB nach unten abtropfen, in die Auslassöffnung ALA des Spülbehälters SPB sichergestellt ist.

Die Ablaufrippen AR sind vorzugsweise auf der der Spülbehälterseitenwand SW abgewandten Innenwand des Luftführungskanals LK angebracht, da diese außenseitige Innenwand des Luftführungskanals kühler als die dem Spülbehälter SPB zugewandte Innenwand des Luftführungskanals ist. An dieser kühleren Innenwand schlägt sich Kondenswasser stärker als an der der Seitenwand SW zugewandten Innenwand des Luftführungskanals LK nieder. Es kann also genügen, wenn die Ablaufrippen AR als Stegelemente ausgebildet sind, die von der außen liegenden Innenwand des Luftführungskanals LK nur über eine Teilbreite der Gesamtquerschnittsbreite des als Flachkanal ausgebildeten Luftführungskanals in Richtung auf die innenliegende, der Seitewand SW zugewandten Innenwand des Luftführungskanals abstehen, so dass eine laterale Querschnittslücke zur Luftdurchströmung verbleibt. Gegebenenfalls kann es aber auch zweckmäßig sein, die Ablaufrippen AR zwischen der außen liegenden Innenwand und der innen liegenden Innenwand des Luftführungskanals LK durchgängig auszubilden. Dadurch wird insbesondere im Krümmungsabschnitt KRA eine gezieltere Luftführung erreicht. Störende Luftverwirbelung sind weitgehend vermieden. Auf diese Weise kann durch des als Flachkanal ausgebildeten Lüftführungskanals LK eine gewünschtes Luftvolumen gefördert werden.

Die Rücklaufrippe RR ist vorzugsweise innenseitig an der außenliegenden Innenwand des Luftführungskanals LK als Stegelement angebracht, das auf einer Teilbreite bzw. Teilweite der Gesamtweite des flach ausgebildeten Luftführungskanals LK in Richtung auf dessen innenliegende Innenwand hin absteht. Dadurch ist sichergestellt, dass ein ausreichender Durchtrittsquerschnitt im Bereich der Rücklaufrippe RR zum Durchströmen des Luftstroms LS1 frei bleibt. Alternativ kann es selbstverständlich auch zweckmäßig sein, die Rücklaufrippe RR als durchgängiges Element zwischen der außenseitigen Innenwand und der innen liegenden Innenwand des Luftführungskanals LK vorzusehen und für den Luftdurchtritt insbesondere mittig liegende Durchtrittsöffnungen vorzusehen.

Die Ablaufrippen AR sowie die Rücklaufrippe RR dienen insbesondere auch dazu, Wassertröpfchen, Reinigungsmitteltröpfchen, Klarspülmitteltröpfchen, und/oder sonstige Aerosole, die sich in der einströmenden Luft LS1 befinden, abzuscheiden und durch die Auslassöffnung ALA in den Spülbehälter SPB zurückzuführen. Dies ist insbesondere vorteilhaft bei einem Desorptionsvorgang, wenn zeitgleich ein Reinigungsschritt stattfindet. Während dieses Reinigungsschritts kann sich relativ viel Dampf bzw. Nebel im Spülbehälter SPB, insbesondere auf Grund des Versprühens von Flüssigkeit mittels der Sprüharme SA, befinden. Ein derartiger Dampf bzw. Nebel kann sowohl Wasser als auch Reinigungsmittel oder Klarspüler sowie sonstige Reinigungstoffe fein verteilt enthalten. Für diese im Luftstrom LS1 mitgeführten fein dispergierten Flüssigkeitsteilchen bilden die Ablaufrippen AR, eine Abscheidungsvorrichtung. Anstelle von Ablaufrippen AR können alternativ in vorteilhafter Weise auch sonstige Abscheidungsmittel, insbesondere Gebilde mit einer Vielzahl von Kanten wie z. B. Drahtgeflechte, vorgesehen sein.

Insbesondere sorgt der schräg nach oben oder im Wesentlichen vertikal ansteigende Rohrabschnitt AU dafür, dass Flüssigkeitströpfchen oder gar Sprühstrahlen, die von einer Sprüheinrichtung SA, wie zum Beispiel einem Sprüharm beim Reinigungsvorgang oder sonstigem Spülvorgang, ausgesprüht werden, weitgehend davon abgehalten werden, direkt über die angesaugte Luftströmung LS1 in das Sorptionsmaterial des Sorptionsbehälters zu gelangen. Ohne diesen Rückhalt bzw. diese Abscheidung von Flüssigkeitströpfchen, insbesondere Nebeltröpfchen bzw. Dampftröpfchen, könnte das Sorptionsmaterial ZEO für einen Sorptionsvorgang beim Trockenschritt unzulässig feucht und unbrauchbar gemacht werden. Insbesondere könnte es zu einer vorzeitigen Sättigung durch eingeschleuste Flüssigkeitströpfchen wie z.B. Nebeltröpfchen bzw. Dampftröpfchen kommen. Durch den einlassseitigen, aufsteigenden Ast AU des Durchführungskanals sowie den ein oder mehreren Abscheidungs- bzw. Abfangelementen im oberen Kniebereich bzw. Scheitelbereich des Krümmungsabschnitts KRA zwischen dem aufsteigenden Ast AU und dem abfallenden Ast AB des Durchführungskanals ist es zudem auch weitgehend vermieden, dass Reinigungsmitteltröpfchen, Klarspülertröpfchen, und/oder sonstige Aerosoltröpfchen über diese Barriere hinaus weiter nach unten zum Lüfter LT und von dort aus in den Sorptionsbehälter SB gelangen können. Selbstverständlich ist es auch möglich, anstelle der Kombination aus ansteigendem Rohrabschnitt AU und abfallendem Rohrabschnitt AB sowie anstelle der ein oder mehreren Abscheidungselemente eine anders ausgebildete Barriereeinrichtung mit derselben Funktion vorzusehen.

Zusammenfassend betrachtet weist die Geschirrspülmaschine GS hier im Ausführungsbeispiel eine Trocknungseinrichtung zum Trocknen von Spülgut durch Sorption mittels reversibel dehydrierbarem Sorptionsmaterial ZEO auf, das in einem Sorptionsbehälter SE gelagert ist. Dieser ist über mindestens einen Luftführungskanal LK mit dem Spülbehälter SPB zur Erzeugung einer Luftströmung LS1 verbunden. Der Luftführungskanal weist entlang seinem einlassseitigen Rohrabschnitt RA1 eine im Wesentlichen flach rechteckförmige Querschnittsgeometrieform auf. Der Luftführungskanal geht in Strömungsrichtung betrachtet nach seinem einlassseitigen Rohrabschnitt RA1 in einen im Wesentlichen zylinderförmigen Rohrabschnitt VA über. Er ist vorzugsweise aus mindestens einem Kunststoffmaterial hergestellt. Er ist insbesondere zwischen einer Seitenwand SW und/oder Rückwand RW des Spülbehälters und einer äußeren Gehäusewand der Geschirrspülmaschine angeordnet. Der Luftführungskanal LK weist dabei mindestens einen nach oben ansteigenden Rohrabschnitt AU auf. Er erstreckt sich ausgehend von der Austrittsöffnung ALA des Spülbehälters SPB nach oben. Er weist ferner in Strömungsrichtung betrachtet nach dem ansteigenden Rohrabschnitt AU mindestens einen nach unten abfallenden Rohrabschnitt AB auf. Zwischen dem ansteigenden Rohrabschnitt AU und dem abfallenden Rohrabschnitt AB ist mindestens ein Krümmungsabschnitt KRA vorgesehen. Der Krümmungsabschnitt KRA hat insbesondere eine größere Querschnittsfläche als der ansteigende Rohrabschnitt AU und/oder der abfallende Rohrabschnitt AB. Im Inneren des Krümmungsabschnitts KRA sind ein oder mehrere Strömungsleitrippen AR zur Vergleichmäßigen der Luftströmung LS1 vorgesehen. Mindestens eine der Strömungsleitrippen AR erstreckt sich ggf. über den Krümmungsabschnitt KRA in den ansteigenden Rohrabschnitt AU und/oder abfallenden Rohrabschnitt AB hinaus. Die ein oder mehreren Strömungsleitrippen AR sind in Positionen oberhalb der Höhenposition des Auslasses ALA des Spülbehälters SPB vorgesehen. Die jeweilige Strömungsleitrippe AR erstreckt sich von der Spülbehältergehäuse- zugewandten Kanalwand zur gegenüberliegenden, Spülbehältergehäuse- abgewandten Kanalwand des Luftführungskanals LK, vorzugsweise im Wesentlichen durchgängig. Mindestens eine Rücklaufrippe RR ist im Inneren des abfallenden Rohrabschnitts AB an der Spülbehältergehäuse- zugewandten Kanalwand und/oder Spülbehältergehäuse- abgewandten Kanalwand des Luftführungskanals LK an einer Stelle vorgesehen ist, die höher als die Einlassöffnung El des Luftführungskanals LK liegt. Die Rücklaufrippe RR ist über eine Querverbindungsleitung RF im Zwischenraum zwischen dem absteigenden Rohrabschnitt AU und dem abfallenden Rohrabschnitt AB zur Kondensatrückführung mit der Einlassöffnung El des Luftführungskanals LK verbunden. Sie weist ein Gefälle zur Einlassöffnung El hin auf. Die Rücklaufrippe erstreckt sich von der Spülbehältergehäusezugewandten Kanalwand zur gegenüberliegenden, Spülbehältergehäuse- abgewandten Kanalwand des Luftführungskanals LK vorzugsweise lediglich auf einer Teilquerschnittsbreite.

In der Figur 3 ist der abfallende Ast AB des Luftführungskanals LK im Wesentlichen senkrecht in die Lüftereinheit LT eingeführt. Die angesaugte Luftströmung LS1 wird von der Lüftereinheit LT ausgangsseitig über einen rohrförmigen Verbindungsabschnitt VA in einen daran angekoppelten Einlassstutzen ES des Sorptionsbehälters SB in dessen bodennahem Bereich eingeblasen. Dabei strömt die Luftströmung LS1 in den unteren Bereich des Sorptionsbehälters SB mit einer Einströmrichtung ESR ein und wechselt in eine davon verschiedene Strömungsrichtung DSR, mit der sie das Innere des Sorptionsbehälters SB durchströmt. Diese Durchströmungsrichtung DSR verläuft von unten nach oben durch den Sorptionsbehälter SB. Insbesondere lenkt der Einlassstutzen ES die ankommende Luftströmung LS1 derart in den Sorptionsbehälter SB ein, dass diese aus ihrer Einströmrichtung ESR insbesondere um etwa 90 Grad in die Durchströmungsrichtung DSR des Sorptionsbehälters SB umgelenkt ist.

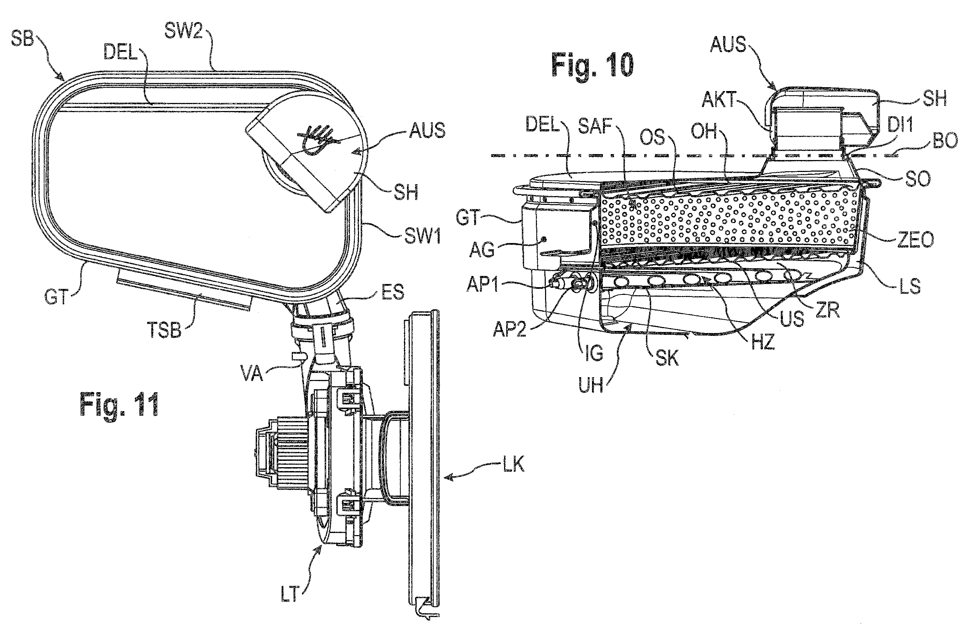

Gemäß der Figur 3 ist der Sorptionsbehälter SB unterhalb des Bodens BO in einer Bodenbaugruppe BG des Spülbehälters SPB weitgehend freihängend derart angeordnet, dass er gegenüber benachbarten Komponenten und/oder Teilen der Bodenbaugruppe BG zum Hitzeschutz einen vorgegebenen Mindestspaltabstand LS (siehe auch Figure 10) aufweist. Für den unterhalb des Bodens BO des Spülbehälters, d.h. hier des Deckenelements der Bodenbaugruppe BG freihängend angebrachten Sorptionsbehälter SB ist mindestens ein Transportsicherungselement TRS in einem vorgegebenen Freiraumabstand FRA derart vorgesehen, dass der Sorptionsbehälter SB von unten her abgestützt ist, falls sich der Sorptionsbehälter SB beim Transport aus seiner freihängenden Lageposition nach unten bewegt. Der Sorptionsbehälter SB weist zumindest im Bereich seiner Sorptionseinheit SE mindestens ein Außengehäuse AG zusätzlich zu seinem Innengehäuse IG derart auf, dass dort sein Gesamtgehäuse doppelwandig ausgebildet ist. Zwischen dem Innengehäuse IG und dem Außengehäuse AG ist somit ein Luftspaltfreiraum LS als Wärmeisolationsschicht vorhanden. Dadurch, dass der Sorptionsbehälter SB zumindest ringsum den Lagebereich seiner Sorptionseinheit SE teilweise oder ganz mindestens doppelwandig ausgebildet ist, ist zusätzlich oder unabhängig zur frei aufgehängten Lagerung bzw. Unterbringung des Sorptionsbehälters SB eine weitere Überhitzungsschutzmaßnahme bereitgestellt, um etwaige benachbarte Bauteile und Komponenten der Bodenbaugruppe BG vor unzulässig hoher Überhitzung oder Verbrennungen ausreichend zu schützen.

Verallgemeinert ausgedrückt weist das Gehäuse des Sorptionsbehälters SB eine derartige Geometrieform auf, dass umlaufend zu den übrigen Teilen bzw. Komponenten der Bodenbaugruppe BG ein ausreichender Spaltabstand als Hitzeschutz vorhanden ist. Beispielsweise weist der Sorptionsbehälter SB zu diesem Zweck an seiner der Rückwand RW der Bodenbaugruppe BG zugewandten Gehäusewand SW2 eine gewölbte Ausformung AF an, die mit der ihr zugewandten Geometrieform der Rückwand RW korrespondiert.

Der Sorptionsbehälter SB ist an der Unterseite des Bodens BO, insbesondere im Bereich einer Durchgangsöffnung DG (siehe Figur 3, 13) des Bodens BO, des Spülbehälters SPB angebracht. Dies ist insbesondere in der schematischen Seitenansicht der Figur 3 veranschaulicht. Dort weist der Boden BO des Spülbehälters SPB ausgehend von seinen Außenrändern ARA ein auf einen Flüssigkeitssammelbereich FSB zulaufendes Gefälle auf. Der Sorptionsbehälter SB ist derart am Boden BO des Spülbehälters SPB montiert, dass sein Deckelteil DEL im Wesentlichen parallel zur Unterseite des Bodens BO sowie mit einem vorgegebenen Spaltabstand LSP zu diesem verläuft. Zur freihängenden Lagerung des Sorptionsbehälters SB ist eine Koppelverbindung zwischen mindestens einem bodenunterseitigen Bauteil, insbesondere einem Sockel SO, des Sorptionsbehälters SB und einem bodenoberseitigen Bauteil, insbesondere dem Auslasselement AUS, des Sorptionsbehälters SB im Bereich einer Durchgangsöffnung DG im Boden BO des Spülbehälters SB vorgesehen. Als Koppelverbindung ist insbesondere eine Klemmverbindung vorgesehen. Die Klemmverbindung kann durch eine lösbare Verbindung, insbesondere Schraubverbindung, mit oder ohne Bajonettverschluss BJ (siehe Figur 13), zwischen dem bodenunterseitigen Bauteil des Sorptionsbehälters SB und dem bodenoberseitigen Bauteil des Sorptionsbehälters SB gebildet sein. Eine Randzone RZ (siehe Figur 13) ringsum die eine Durchgangsöffnung DG des Bodens BO ist zwischen einem bodenunterseitigem Auslassbauteil, wie z.B. SO des Sorptionsbehälters SB und dem über dem Boden BO angeordneten Auslasselement bzw. Spritzschutzbauteil AUS festgeklemmt. In der Figur 13 ist der zeichnerischen Einfachheit halber der Boden BO sowie das bodenunterseitige Unterteil lediglich strichpunktiert angedeutet. Das bodenunterseitige Auslassbauteil und/oder das bodenoberseitiges Spritzschutzbauteil AUS ragt mit seinem stirnseitigen Endabschnitt durch die Durchgangsöffnung DG des Bodens BO. Das bodenseitige Auslassteil weist einen Sockel SO ringsum die Austrittsöffnung AO des Deckelteils DEL des Sorptionsbehälters SB auf. Das bodenoberseitige Spritzschutzbauteil AUS weist einen Ausströmstutzen AKT und eine Spritzschutzhaube SH auf. Zwischen dem bodenoberseitigen Bauteil AUS und dem bodenunterseitigen Bauteil SO ist mindestens ein Dichtungselement DI1 vorgesehen.

Zusammenfassend betrachtet ist der Sorptionsbehälter SB also unterhalb des Bodens BO des Spülbehälters SPB weitgehend freihängend derart angeordnet, dass er gegenüber benachbarten Komponenten und Teilen der Bodenbaugruppe BG zum Hitzeschutz einen vorgegebenen Mindestspaltabstand LSP aufweist. Unterhalb des Sorptionsbehälters SB ist zusätzlich ein Transportsicherungselement TRS in einem vorgegebenen Freiraumabstand FRA feststehend am Boden der Bodenbaugruppe angebracht. Dieses Transportsicherungselement TRS dient dazu, den unterhalb des Bodens BO des Spülbehälters SPB freihängend angebrachten Sorptionsbehälters SB gegebenenfalls von unten her abzustützen, wenn dieser zum Beispiel beim Transport zusammen mit dem Boden BO aufgrund von Erschütterungen nach unten durchschwingt. Dieses Transportsicherungselement TRS kann insbesondere durch eine nach unten U-förmig gebogene Metallklammer gebildet sein, die am Boden der Bodenbaugruppe feststehend montiert ist. Der Sorptionsbehälter SB weist oben an seinem Deckelteil DEL die Ausströmöffnung AO auf. Rings um den Außenrand dieser Ausströmöffnung AO ist ein nach oben abstehender Sockel SO angebracht. In der etwa kreisrunden Öffnung dieses Sockels SO ist ein zylinderförmiges Sockelstutzenelement STE angebracht (siehe Figuren 4, 5, 9, 13) das nach oben hin absteht und als Gegenstück zu dem daran zu befestigenden Ausströmstutzen bzw. Ausblaskaminstutzen AKT dient. Es weist vorzugsweise ein Außengewinde mit integriertem Bajonettverschluss BJ auf, das mit dem Innengewinde des Ausblaskaminstutzens AKT entsprechend zusammenwirkt. Der Sockel SO weist auf seinem oberseitigen, ringsum den Sockelstutzen STE konzentrisch herumlaufenden Aufnahmerand den Dichtungsring DI1 auf. Dies ist in den Figuren 3, 4, 9, 13 veranschaulicht. Der Sorptionsbehälter SB liegt dabei mit diesem Dichtungsring DI1 an der Unterseite des Bodens BO fest angedrückt an. Er wird durch die Höhe des Sockels SO auf Abstand bzw. Freiraum LSP von der Unterseite des Bodens BO gehalten. Von der Oberseite des Bodens BO her ist durch die Durchstecköffnung DG des Bodens BO der Ausblaskaminstutzen AKT nach unten hindurchgesteckt und mit dem gegenstückigen Sockelstutzen STE verschraubt sowie durch den Bajonettverschluss BJ öffnungsgesichert. Der Ausblaskaminstutzen AKT liegt dabei ringsumlaufend einer Außenrandzone RZ des Bodens BO um die Durchtrittsöffnung DG mit einer ringförmigen Außenkante APR festaufliegend an. Denn die Außenrandzone RZ des Bodens BO ringsum die Durchtrittsöffnung DG ist zwischen einem ringsumlaufenden, unteren Auflagerand APR des Ablasskaminstutzens AKT und dem oberen Auflagerand des Sockels AO mittels des dort angeordneten Dichtrings D11 flüssigkeitsabdichtend festgeklemmt. Da der Dichtring DI1 von der Unterseite an den Boden BO drückt, ist er gegenüber etwaigen Beeinträchtigungen oder Beschädigungen durch Reinigungsmittel in der Spülflüssigkeit vor Alterung gesichert. Auf diese Weise ist eine dichte Durchsteckverbindung zwischen dem Ausblaskaminstutzen AKT und dem Sockel SO gebildet. Diese fungiert in vorteilhafter Weise gleichzeitig als Aufhängevorrichtung für den Sorptionsbehälter SB.

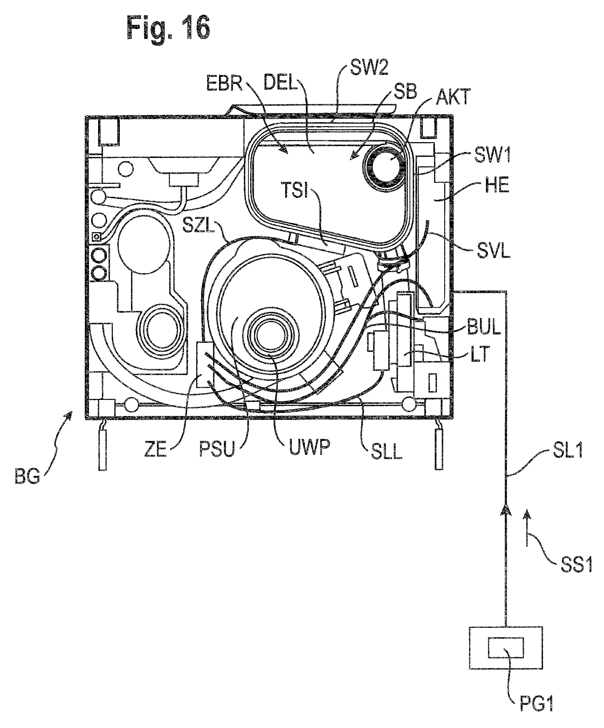

Dadurch, dass der Sockel SO um eine Sockelhöhe LSP von der übrigen Oberfläche des Deckelteils DEL nach oben absteht, ist sichergestellt, dass ein Spaltfreiraum zwischen dem Deckelteil DEL und der Unterseite des Bodens BO vorhanden ist. Der Boden BO des Spülbehälters SPB läuft hier im Ausführungsbeispiel von Figur 3 ausgehend von seiner umlaufenden Randzone mit den Seitenwänden SW und der Rückwand RW in Richtung auf einen vorzugsweise mittigen Flüssigkeitssammelbereich FSB mit Gefälle schräg geneigt zu. Darunter kann sich der Pumpensumpf PSU einer Umwälzpumpe UWP befinden (siehe Figur 16). In der Figur 3 ist dieser von außen nach innen schräg auf den tiefer gelegenen Sammelbereich FSB zulaufende Boden BO strichpunktiert eingezeichnet. Die Anordnung des Pumpensumpfes PSU mit der darin sitzende Umwälzpumpe UWP unterhalb des tiefer gelegenen Sammelbereichs FSB ist aus dem Draufsichtsbild der Bodenbaugruppe BG von Figur 16 ersichtlich. Der Sorptionsbehälter SB ist vorzugsweise derart am Boden BO des Spülbehälters SPB montiert, dass sein Deckelteil DEL im Wesentlichen parallel zur Unterseite des Bodens BO sowie mit einem vorgegebenen Spaltabstand LSP zu diesem verläuft. Zu diesem Zweck ist der Sockel SO an dem darinsitzenden Sockelstutzen STE gegenüber der Flächenormalen des Deckelteils DEL mit einem entsprechenden Neigungswinkel schräg gestellt.

Entsprechend den Figuren 4 mit 10 weist der Sorptionsbehälter SB ein topfförmiges Gehäuseteil GT auf, das mit einem Deckelteil DEL verschlossen ist. Im topfförmigen Gehäuseteil GT ist zumindest die Sorptioneinheit SE mit reversibel dehydrierbaren Sorptionsmaterial ZEO vorgesehen. Die Sorptionseinheit SE ist im topfförmigen Gehäuseteil GT derart untergebracht, dass ihr Sorptionmaterial ZEO im Wesentlichen in oder entgegen zur Schwerkraftrichtung mit einer Luftströmung LS2 durchströmbar ist, die durch Umlenken der über den Luftführungskanal LK herbeigeführten Luftströmung LS1 erzeugt ist. Die Sorptionseinheit SE weist mindestens ein unteres Siebelement oder Gitterelement US und mindestens ein oberes Siebelement oder Gitterelement OS in einem vorgebbaren Höhenabstand H voneinander auf (siehe insbesondere Figure 9). Das Raumvolumen zwischen den beiden Siebelementen oder Gitterelementen US, OS ist mit dem Sorptionsmaterial ZEO weitgehend vollständig ausgefüllt. Im topfförmigen Gehäuseteil GT ist mindestens eine Heizungseinrichtung HZ vorgesehen. Im topfförmigen Gehäuseteil GT ist in Durchströmungsrichtung DSR des Sorptionsbehälters SB betrachtet die Heizungseinrichtung HZ insbesondere vor der Sorptioneinheit SE mit dem reversibel dehydrierbaren Sorptionsmaterial ZEO vorgesehen. Die Heizungseinrichtung HZ ist in einem unteren Hohlraum UH des topfförmigen Gehäuseteils GT zum Sammeln einströmender Luft LS1 aus dem Luftführungskanal LK vorgesehen. Im topfförmigen Gehäuseteil GT ist die Eintrittsöffnung EO für den Luftführungskanal LK vorgesehen. Im Deckelteil DEL ist die Austrittsöffnung AO für das Auslasselement AUS vorgesehen. Für das Deckelteil DEL und das topfförmige Gehäuseteil GT ist ein hitzebeständiger Werkstoff, insbesondere Metallblech, bevorzugt Edelstahl oder eine Edelstahllegierung verwendet. Das Deckelteil DEL schließt das topfförmige Gehäuseteil GT weitgehend hermetisch ab. Der umlaufende Außenrand des Deckelteils DEL ist mit dem oberen Rand des topfförmigen Gehäuseteils GT lediglich durch eine mechanische Verbindung, insbesondere durch eine Umform-, Füge-, Rast-, Klemm-, insbesondere durch eine Umbördelverbindung, oder Clinchverbindung, verbunden. Das topfförmige Gehäuseteil GT weist ein oder mehrere Seitenwände SW1, SW2 auf (siehe Figur 5), die im Wesentlichen vertikal verlaufen. Es hat eine Außenkonturform, die im Wesentlichen der Innenkonturform eines für ihn vorgesehenen Einbaubereichs EBR, insbesondere in einer Bodenbaugruppe BG, entspricht (siehe Figur 16). Die beiden aneinandergrenzende Seitenwände SW1, SW2 weisen Außenflächen, die im Wesentlichen rechtwinklig zueinander verlaufen. Mindestens eine Seitenwand, wie z.B. SW2 weist mindestens eine Ausformung, wie z.B. AF auf, die im Wesentlichen komplementär zu einer Ausformung an der Rückwand und/oder Seitenwand der Bodenbaugruppe BG ist, die unter dem Boden BO des Spülbehälters SPB vorgesehen ist. Der Sorptionsbehälter SB ist in einem hinteren Eckbereich EBR zwischen der Rückwand RW und einer angrenzenden Seitenwand SW der Geschirrspülmaschine GS, insbesondere deren Bodenbaugruppe BG vorgesehen.

Das topfförmige Gehäuseteil GT weist mindestens eine Durchgangsöffnung DUF für mindestens ein elektrisches Kontaktelement AP1, AP2 auf (siehe Figur 4). In einem Überdachungsbereich oberhalb der Durchgangsöffnung DUF ist mindestens über deren Erstreckung ein Tropfschutzblech TSB angebracht. Das Tropfschutzblech TSB weist eine Ablaufschräge auf.

Figur 4 zeigt anhand einer schematischen sowie perspektivischen Explosionsdarstellung die verschiedenen Komponenten des Sorptionsbehälters SB im auseinandergebauten Zustand. Die Komponenten des Sorptionsbehälters SB sind in mehreren Lageebenen übereinander angeordnet. Dieser von unten nach oben geschichtete Konstruktionsaufbau des Sorptionsbehälters SB ist insbesondere im Schnittbild von Figur 9 sowie in der aufgeschnittenen Perspektivdarstellung von Figur 10 veranschaulicht. Der Sorptionsbehälter SB weist den bodennahen, unteren Hohlraum UH, zum Sammeln einströmender Luft aus dem Einlassstutzen ES auf. Über diesem unteren Hohlraum UH sitzt ein Schlitzblech SK, das als Strömungskonditionierungsmittel für eine darüber angeordnete Rohrschlangenheizung HZ dient. Das Schlitzblech SK sitzt dabei auf einer ringsum im Innenraum des Sorptionsbehälters SB umlaufenden Auflagekante. Diese Auflagekante weist gegenüber dem Innenboden des Sorptionsbehälters SB einen vorgegebenen Höhenabstand zur Bildung des unteren Hohlraums UH auf. Das Schlitzblech SK weist vorzugsweise ein oder mehrere Klemmteile auf, um es lateral bzw. seitlich mit einer Teilfläche, mindestens einer Innenwand des Sorptionsbehälters SB, zu verklemmten. Dadurch kann eine zuverlässige Lagersicherung für das Schlitzblech SK bereitgestellt werden. Entsprechend der Unteransicht des Schlitzbleches von Figur 6 weist dieses Schlitze SL auf, die im Wesentlichen dem Windungsverlauf der über dem Schlitzblech angeordneten Rohrschlangenheizung nachfolgen. Die Schlitze bzw. Durchlässe SL des Schlitzbleches SK sind dabei an denjenigen Orten, an denen die in den Sorptionsbehälter SB eintretende Luftströmung LS1 in Durchströmungsrichtung DSR des Sorptionsbehälters SB eine geringere Geschwindigkeit aufweist, größer, insbesondere weiter bzw. breiter, ausgebildet, als an denjenigen Orten, an denen die in den Sorptionsbehälter eintretende Luftströmung LS1 in Durchströmungsrichtung DSR des Sorptionsbehälters SB eine größere Geschwindigkeit aufweist. Dadurch wird eine weitgehende Vergleichmäßigung des örtlichen Strömungsquerschnittprofils der Luftströmung LS2 erreicht, die von unten nach oben in Durchströmungsrichtung DSR den Sorptionsbehälter SB durchströmt. Im Rahmen der Erfindung wird dabei unter Vergleichmäßigung des örtlichen Strömungsquerschnittprofils der Luftströmung insbesondere verstanden, dass im Wesentlichen an jeder Eintrittsstelle einer Durchströmungsfläche im Wesentlichen dasselbe Luftvolumen mit etwa derselben Strömungsgeschwindigkeit hindurchtritt.

Die Rohrschlangenheizung RZ ist mit einem vorgegebenen Höhenfreiraum in Durchströmungsrichtung DSR betrachtet hinter dem Schlitzblech SK angeordnet. Dazu kann es mittels einer Vielzahl von Blechteilen BT, die stegartig ausgebildet sind, auf Höhenabstand über den Durchlässen SL gehalten werden. Diese Blechteile BT (siehe Figur 6) stützen dabei vorzugsweise alternierend einmal von unten und einmal von oben die Rohrschlangenheizung in deren Verlauf ab. Dadurch wird zum einen eine zuverlässige Lagesichersicherung der Rohrschlangenheizung HZ über dem Schlitzblech SK ermöglicht. Zum anderen sind Verwerfungen des Schlitzbleches SK, die unter der Hitzeentwicklung der Rohrschlangenheizung HZ auftreten könnten, weitgehend vermieden. In Durchströmungsrichtung DSR betrachtet folgt der Rohrschlangenheizung HZ ein freier Zwischenraum ZR (siehe Fig. 9) nach, bis die im Wesentlichen von unten nach oben aufsteigende Luftströmung LS2 in die Eintrittsquerschnittsfläche SDF der Sorptionseinheit SE eintritt. Diese Sorptionseinheit SE weist eingangsseitig ein unteres Siebelement oder Gitterelement US auf. In einem Höhenabstand H von diesem Siebelement oder Gitterelement US ist ein ausgangsseitiges, oberes Siebelement oder Gitterelement OS vorgesehen. Für die beiden Siebelemente US, OS, sind an den Innenwänden des Sorptionsbehälters abschnittsweise oder ringsum Auflagekanten vorgesehen, um die Siebelemente US, OS in ihrer zugeordneten Höhenlage zu positionieren und zu halten. Die beiden Siebelemente US, OS, sind vorzugsweise in diesem vorgegebenen Höhenabstand H parallel zueinander angeordnet. Zwischen dem unteren Siebelement US und dem oberen Siebelement OS ist das Sorptionsmaterial ZEO derart eingefüllt, dass das Volumen zwischen den beiden Siebelementen US, OS weitgehend vollständig ausgefüllt ist. Im eingebauten Zustand des Sorptionsbehälters SB ist das eingangsseitige Siebelement US sowie das ausgangsseitige Siebelement OS bezogen auf die vertikal verlaufende Mittelachse des Sorptionsbehälters SB bzw. bezogen auf dessen Durchströmungsrichtung DSR in im Wesentlichen horizontalen Lageebenen übereinander mit dem vorgegebenen Höhenabstand H voneinander angeordnet. Mit anderen Worten ausgedrückt ist also die Sorptionseinheit SE hier im Ausführungsbeispiel durch ein Füllvolumen an Sorptionsmaterial ZEO zwischen einem unteren Siebelement US und einem oberen Siebelement OS gebildet. In Durchströmungsrichtung DSR betrachtet, ist über der Sorptionseinheit SE der oberer Hohlraum OH zum Sammeln ausströmender Luft vorgesehen. Diese ausströmende Luft LS2 wird durch den Auslass AO des Sockelstutzens STE in den Ausblaskaminstutzen ATK geleitet, von wo aus sie in den Innenraum des Spülbehälters SPB ausgeblasen wird.

Durch das Schlitzblech SK wird eine Strömungskonditionierung bzw. Strömungsbeeinflussung der von unten nach oben in Durchströmungsrichtung DSR aufsteigenden Strömung LS2 derart vorgenommen, dass die Rohrschlangenheizung im Wesentlichen an jeder Stelle ihres Längsverlaufs im Wesentlichen mit demselben Luftvolumenstrom umströmt wird. Durch die Kombination von Schlitzblech und darüber angeordneter Rohrschlangenheizung HZ wird weitgehend sichergestellt, dass die Luftströmung LS2 vor der Eintrittsfläche des unteren Siebelements US der Sorptionseinheit SE weitgehend gleichmäßig beim Desorptionsvorgang aufgeheizt werden kann. Dabei sorgt das Schlitzblech für eine weitgehend gleichmäßige örtliche Verteilung des aufgeheizten Luftvolumenstroms über die Eintrittsquerschnittsfläche STF der Sorptionseinheit SE betrachtet.

Zusätzlich zum Schlitzblech SK kann es gegebenenfalls auch zweckmäßig sein, eine Heizungseinrichtung außerhalb des Sorptionsbehälters BE in dem Verbindungsabschnitt zwischen der Lüftereinheit LT und der Einlassöffnung des Sorptionsbehälters SB vorzusehen. Da die Durchschnittsquerschnittsfläche dieses rohrförmigen Verbindungsabschnitts VA kleiner als die Durchschnittsquerschnittsfläche des Sorptionsbehälters SB für eine Luftströmung ist, kann die Luftströmung LS1, bevor sie in den Sorptionsbehälter SB gelangt, bereits vorab weitgehend gleichmäßig für den Desorptionsvorgang aufgeheizt werden.
Insbesondere wenn die Aufheizung der Luft mittels einer Heizungseinrichtung im Sorptionsbehälter SB erfolgt, kann es gegebenenfalls auch zweckmäßig sein, in Durchströmungsrichtung DSR des Sorptionsbehälters SB betrachtet sowohl vor als auch nach der Heizungseinrichtung HZ jeweils mindestens ein Strömungskonditionierungselement derart vorzusehen, dass die Volumenmenge an Sorptionsmaterial ZEO hinter der Eintrittsquerschnittsfläche SDF des unteren Siebelements US an jeder Stelle etwa mit dem selben Luftvolumenstrom durchströmbar ist. Dadurch wird insbesondere auch beim Sorptionsvorgang, während dem die Heizungsvorrichtung HZ deaktiviert ist, das heißt ausgeschaltet ist, weitgehend erreicht, dass sämtliches Sorptionsmaterial weitgehend vollständig bei der Entfeuchtung der durchströmenden Luft LS1 beteiligt ist. In analoger Weise wird beim Desorptionsvorgang, bei dem die durchströmende Luft LS2 durch die Heizungseinrichtung HZ aufgeheizt ist, aus sämtlichen Sorptionsmaterial im Zwischenraum zwischen den beiden Siebelementen US, OS gespeichertes Wasser wieder zum Austreten gebracht, so dass an allen Stellen innerhalb dieses Raumvolumens das Sorptionsmaterial ZEO im Wesentlichen vollständig getrocknet und damit regeneriert für einen nachfolgenden Trocknungsvorgang zur Verfügung gestellt werden kann.

Die Durchströmungsquerschnittsfläche SDF der Sorptionseinheit SE im Inneren des Sorptionsbehälters SB ist hier im Ausführungsbeispiel größer als die Durchschnittsquerschnittsfläche des endseitigen Einlassstutzens ES des Luftführungskanals LK bzw. des rohrförmigen Verbindungsabschnitts VA ausgebildet. Die Durchströmungsquerschnittsfläche SDF des Sorptionsmaterials ist vorzugsweise zwischen den 2- und 40-fachen, insbesondere zwischen dem 4- und 30-fachen, bevorzugt zwischen dem 5- und 25-fachen, größer als die Durchschnittsquerschnittsfläche des Einlassstutzens ES des Luftführungskanals LK ausgebildet, mit der dieser in die Eintrittsöffnung EO des Sorptionsbehälters SB einmündet.

Zusammenfassend betrachtet füllt das Sorptionsmaterial ZEO zwischen dem unteren Siebelement US und dem oberen Siebelement OS ein Schüttvolumen derart aus, dass die Strömungseintrittsquerschnittsfläche SDF sowie eine Strömungsaustrittsquerschnittsfläche SAF im Wesentlichen senkrecht zur Durchströmungsrichtung DSR, die in vertikaler Richtung verläuft, aufweist. Das untere Siebelement US, das obere Siebelement OS sowie das dazwischen eingelagerte Sorptionsmaterial ZEO weisen jeweils zueinander kongruente Durchdringungsflächen für die durchströmende Luft LS2 auf. Dadurch ist weitgehend sichergestellt, dass an jeder Stelle im Volumen der Sorptionseinheit SE deren Sorptionsmaterial etwa mit demselben Volumenstrom beaufschlagt werden kann. Dadurch sind bei der Desorption Überhitzungsstellen und damit etwaige Schädigungen des Sorptionsmaterials ZEO weitgehend vermieden. Bei der Sorption wird eine gleichmäßige Feuchtigkeitsaufnahme aus der zu trocknenden Luft und damit eine optimale Ausnutzung des in der Sorptionseinheit SE zur Verfügung gestellten Sorptionsmaterial ZEO ermöglicht.

Verallgemeinernd zusammengefasst sind ein oder mehrere Strömungskonditionierungselemente SK im Sorptionsbehälter SB und/oder in einem eingangsseitigen Rohrabschnitt VA, ES des Luftführungskanals LK, insbesondere nach mindestens einer in den Luftführungskanal LK eingefügten Lüftereinheit LT, derart mit ein oder mehreren Luftdurchlässen SL vorgesehen, dass eine Vergleichmäßigung des örtlichen Strömungsquerschnittsprofils der Luftströmung LS2 beim Durchströmen des Sorptionsbehälters SB in dessen von unten nach oben gerichteten Durchströmungsrichtung DSR bewirkt ist. In Durchströmungsrichtung DSR des Sorptionsbehälters SB betrachtet ist in dessen unterem Hohlraum UH mindestens ein Strömungskonditionierungselement SK mit Höhenabstand vor der Heizungseinrichtung HZ vorgesehen. Als Strömungskonditionierungselement SK ist hier im Ausführungsbeispiel ein Schlitzblech oder Lochblech vorgesehen. Die Schlitze SL im Schlitzblech SK folgen im Wesentlichen dem Windungsverlauf einer Rohrschlangenheizung HZ nach, die mit Freiraumabstand oberhalb der Schlitze SL im Schlitzblech als Heizungseinrichtung positioniert ist. Das Schlitzblech ist im Wesentlichen parallel sowie mit einem Freiraumabstand zur Lufteintrittsquerschnittsfläche SDF der Sorptioneinheit SE des Sorptionsbehälters SE angeordnet. Luftdurchlässe, insbesondere Schlitze SL, im Strömungskonditionierungselement SK sind an denjenigen Orten, an denen die in den Sorptionsbehälter SB eintretende Luftströmung LS1 in Durchströmungsrichtung DSR des Sorptionsbehälters SB eine geringere Geschwindigkeit aufweist, größer als an denjenigen Orten ausgebildet, an denen die in den Sorptionsbehälter SB eintretende Luftströmung LS1 in Durchströmungsrichtung DSR des Sorptionsbehälters SB eine größere Geschwindigkeit aufweist.

Zusammengefasst weist das Sortionstrocknungssystem TS im Bereich des Sorptionsbehälters SB folgende spezifische Strömungsverhältnisse auf. Der Luftführungskanal LK ist mit dem Sorptionsbehälter SB derart gekoppelt, dass die eintretende Luftströmung LS1 in den Sorptionsbehälter SB mit einer Einströmungsrichtung ESR einmündet und in eine davon verschiedene Durchströmungsrichtung DSR übergeht, mit der sie das Innere des Sorptionsbehälters SB durchströmt. Die Austrittsströmungsrichtung der aus dem Sorptionsbehälter SB austretenden Luftströmung LS2 entspricht im Wesentlichen der Durchströmungsrichtung DSR. Der einlassseitige Rohrabschnitt RA1 des Luftführungskanals LK mündet in den Sorptionsbehälter SB derart ein, dass seine Einströmungsrichtung ESR in die Durchströmungsrichtung DSR des Sorptionsbehälters SB, insbesondere zwischen 45° und 135°, bevorzugt um etwa 90°, umgelenkt ist. In Strömungsrichtung betrachtet ist vor dem Sorptionsbehälter SB mindestens die Lüftereinheit LT in den einlassseitigen Rohrabschnitt RA1 des Luftführungskanals LK zur Erzeugung einer Zwangsluftströmung LS1 in Richtung auf mindestens eine Eintrittsöffnung EO des Sorptionsbehälters SB eingefügt. Die Lüftereinheit LT ist in der Bodenbaugruppe BG unterhalb des Spülbehälters SPB angeordnet. Die Durchströmungsquerschnittsfläche SDF für das Sorptionsmaterial ZEO im Inneren des Sorptionsbehälters SB ist größer als die Durchtrittsquerschnittsfläche des Einlassstutzens ES des Luftführungskanals LK ausgebildet, mit der dieser in die Eintrittsöffnung EO des Sorptionsbehälters SB einmündet. Die Durchströmungsquerschnittsfläche SDF des Sorptionsbehälters SB ist vorzugsweise zwischen dem 2- und 40- fachen, insbesondere zwischen dem 4- und 30- fachen, bevorzugt zwischen dem 5- und 25- fachen, größer als die Durchtrittsquerschnittsfläche des endseitigen Einlassstutzens ES des Luftführungskanals LK ausgebildet, mit der dieser in die Eintrittsöffnung EO des Sorptionsbehälters SB einmündet. Im Sorptionsbehälter ist mindestens eine Sorptionseinheit SE mit Sorptionsmaterial ZEO derart untergebracht, dass das Sorptionmaterial ZEO im Wesentlichen in oder entgegen zur Schwerkraftrichtung mit Luft LS1 durchströmbar ist, die über den Luftführungskanal LK aus dem Spülbehälter SPB in den Sorptionsbehälter SB geführt ist. Die Sorptionseinheit SE des Sorptionsbehälters SB weist mindestens ein unteres Siebelement oder Gitterelement US und mindestens ein oberes Siebelement oder Gitterelement OS in einem vorgebbaren Höhenabstand H voneinander auf, wobei das Raumvolumen zwischen den beiden Siebelementen oder Gitterelementen US, OS mit dem Sorptionsmaterial ZEO weitgehend vollständig ausgefüllt ist. Die Eintrittsquerschnittsfläche SDF und die Austrittsquerschnittsfläche SAF der Sorptionseinheit SE des Sorptionsbehälters SB sind insbesondere im Wesentlichen gleich groß gewählt. Die Eintrittsquerschnittsfläche SDF und die Austrittsquerschnittsfläche SAF der Sorptionseinheit SE des Sorptionsbehälters SB sind ferner zweckmäßigerweise im Wesentlichen kongruent zueinander angeordnet. Der Sorptionsbehälter weist in seine Durchströmungsrichtung DSR betrachtet mindestens eine Schichtung aus einem unteren Hohlraum UH und einer darüber angeordneten, in Durchströmungsrichtung DSR nachgeordneten Sorptionseinheit SE auf. Er weist in seinem unteren Hohlraum UH mindestens eine Heizungseinrichtung HZ auf. Der Sorptionsbehälter SE weist über seiner Sorptionseinheit SE mindestens einen oberen Hohlraum OH zum Sammeln ausströmender Luft LS2 auf. Das Sorptionsmaterial ZEO füllt in der Sorptionseinheit SE des Sorptionsbehälters SB ein Schüttvolumen derart aus, das eine zur Durchströmungsrichtung DSR im Wesentlichen senkrecht angeordnete Strömungseintrittsquerschnittsfläche SDF und eine dazu weitgehend parallel angeordnete Strömungsaustrittsquerschnittsfläche SAF gebildet ist. Der Sorptionsbehälter hat in seinem oberen Deckenteil DEL mindestens eine Ausströmöffnung AO, die über eine Durchgangsöffnung DG im Boden BO des Spülbehälters SPB mit dessen Innerem mit Hilfe mindestens eines Ausströmbauteils AKT verbunden ist.

Das Sorptionsmaterial ZEO ist im Sorptionsbehälter SB in vorteilhafter Weise derart in Form der Sorptionseinheit SE gelagert, dass im Wesentlichen jede Eintrittstelle der Durchtrittsquerschnittsfläche SDF der Sorptionseinheit SE mit einem im Wesentlichen gleichen Luftvolumenstromwert beaufschlagbar ist. Als Sorptionsmaterial ZEO ist vorzugsweise ein Aluminium- und/oder Siliziumoxid enthaltendes, reversibel dehydrierbares Material, Silicagel, und/oder Zeolith, insbesondere Zeolith vom Typ A, X, Y allein oder in beliebiger Kombination, vorgesehen. Das Sorptionsmaterial ist im Sorptionsbehälter SB zweckmäßiger Weise in Form eines körnigen Feststoffes oder Granulats mit einer Vielzahl von Partikelkörpern mit einer Körnungsgröße im Wesentlichen zwischen 1 und 6 mm, insbesondere zwischen 2,4 und 4,8 mm, als Schüttung vorgesehen, wobei die Schütthöhe H der Partikelkörper mindestens dem 5-fachen deren Körnungsgröße entspricht. Das als körniger Feststoff oder Granulat vorliegende Sorptionsmaterial ZEO liegt in Schwerkraftrichtung im Sorptionsbehälter zweckmäßigerweise mit einer Schütthöhe vor, die im Wesentlichen dem 5 - bis 40 - fachen, insbesondere dem 10 - bis 15 - fachen, der Partikelgröße des körnigen Feststoffs oder Granulats entspricht. Die Schütthöhe H des Sorptionsmaterials ZEO ist vorzugsweise im Wesentlichen zwischen 1,5 und 25 cm, insbesondere zwischen 2 und 8 cm, bevorzugt zwischen 4 und 6 cm, gewählt. Der körnige Feststoff oder das Granulat kann vorzugsweise aus einer Vielzahl von im Wesentlichen kugelförmigen Partikelkörpern gebildet sein. Das als körniger Feststoff oder Granulat ausgebildete Sorptionsmaterial ZEO weist in vorteilhafter Weise zweckmäßigerweise eine mittlere Schüttdichte von mindestens 500 kg/m³, insbesondere im Wesentlichen zwischen 500 und 800 kg/m³, insbesondere zwischen 600 und 700 kg/m³, insbesondere zwischen 630 bis 650 kg/m³, insbesondere bevorzugt von etwa 640 kg/m³, auf.

Im Sorptionsbehälter SB ist das reversibel dehydrierbare Sorptionsmaterial ZEO zur Absorption einer in der Luftströmung LS2 transportierten Feuchtigkeitsmenge zweckmäßigerweise mit einer derartigen Gewichtsmenge vorgesehen, dass die durch das Sorptionsmaterial ZEO absorbierte Feuchtigkeitsmenge geringer als eine auf das Spülgut aufgebrachte Flüssigkeitsmenge, insbesondere eine im Klarspülschritt aufgebrachte Flüssigkeitsmenge, ist.

Insbesondere kann es zweckmäßig sein, wenn im Sorptionsbehälter SB das reversibel dehydrierbare Sorptionsmaterial mit einer derartigen Gewichtsmenge vorgesehen ist, dass diese ausreicht, eine Feuchtigkeitsmenge zu absorbieren, die im Wesentlichen einer Benetzungsmenge entspricht, mit der das Spülgut nach dem Ende eines Klarspülschritts benetzt ist. Die absorbierte Wassermenge entspricht vorzugsweise zwischen 4 und 25 %, insbesondere zwischen 5 und 15 %, der auf das Spülgut aufgebrachten Flüssigkeitsmenge.

Zweckmäßigerweise ist im Sorptionsbehälter SB eine Gewichtsmenge im Wesentlichen zwischen 0,2 und 5 kg, insbesondere zwischen 0,3 und 3 kg, bevorzugt zwischen 0,5 und 2,5 kg, an Sorptionsmaterial ZEO untergebracht.

Das Sorptionsmaterial ZEO weist insbesondere Poren vorzugsweise mit einer Größe im Wesentlichen zwischen 1 und 12 Angström, insbesondere zwischen 2 und 10, bevorzugt zwischen 3 und 8 Angström, auf.

Es hat zweckmäßigerweise eine Wasseraufnahmekapazität im Wesentlichen zwischen 15 und 40, bevorzugt zwischen 20 und 30 Gewichtsprozent seines Trockengewichts.

Insbesondere ist ein Sorptionsmaterial vorgesehen, das bei einer Temperatur im Wesentlichen im Bereich zwischen 80° und 450°C, insbesondere zwischen 220° und 250°C, desorbierbar ist.

Der Luftführungskanal, der Sorptionsbehälter, und/oder ein oder mehrere zusätzliche Strömungsbeeinflussungselemente sind zweckmäßigerweise derart ausgebildet, dass durch das Sorptionsmaterial zu dessen Sorption und/oder Desorption eine Luftströmung mit einem Volumenstrom im Wesentlichen zwischen 2 und 15 l/sec, insbesondere zwischen 4 und 7 l/sec bewirkbar ist.

Zweckmäßig kann es insbesondere sein, wenn dem Sorptionsmaterial ZEO mindestens eine Heizungseinrichtung HZ zugeordnet ist, mit der eine äquivalente Heizleistung zwischen 250 bis 2500 W, insbesondere zwischen 1000 und 1800 W, bevorzugt zwischen 1200 und 1500 W, zum Aufheizen des Sorptionsmaterials für dessen Desorption bereitstellbar ist.

Vorzugsweise ist das Verhältnis von Heizleistung mindestens einer Heizungseinrichtung, die dem Sorptionsmaterial zu dessen Desorption zugeordnet ist, und Luftvolumenstrom der Luftströmung, die das Sorptionsmaterial durchströmt, zwischen 100 und 1250 W sec/l, insbesondere zwischen 100 und 450 W sec/l, bevorzugt zwischen 200 und 230 W sec/l, gewählt.

Im Sorptionsbehälter ist für das Sorptionsmaterial vorzugsweise eine Durchtrittsquerschnittsfläche im Wesentlichen zwischen 80 und 800 cm², insbesondere zwischen 150 und 500 cm², vorgesehen.

Zweckmäßigerweise ist die Schütthöhe H des Sorptionsmaterials ZEO über die Eintrittsquerschnittsfläche SDF des Sorptionsbehälters SB im Wesentlichen konstant.

Insbesondere ist es zweckmäßig, im Sorptionsbehälter SB das Sorptionsmaterial zur Absorption einer Wassermenge im Wesentlichen zwischen 150 und 400 ml, insbesondere zwischen 200 und 300 ml, auszubilden.

Weiterhin ist für mindestens eine Komponente des Sorptionstrocknungssystems TS mindestens eine thermische Überhitzungschutzeinrichtung TSI (siehe Figuren 4, 6, 8, 9) vorgesehen. Eine solche Komponente kann vorzugsweise durch ein Bauteil des Sorptionsbehälters SB gebildet sein. Diesem Bauteil kann mindestens eine thermische Überhitzungschutzeinrichtung TSI zugeordnet sein. Diese thermische Überhitzungschutzeinrichtung TSI ist außenseitig am Sorptionsbehälter SB angebracht. Als thermische Überhitzungschutzeinrichtung ist mindestens eine elektrische Temperaturschutzeinheit vorgesehen. Sie ist hier im Ausführungsbeispiel der Heizungseinrichtung HZ zugeordnet, die im Sorptionsbehälter SB untergebracht ist.

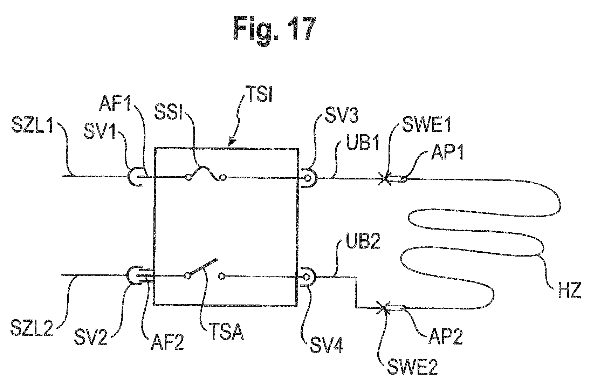

Die elektrische Temperaturschutzeinheit ist im Ausführungsbeispiel der Figuren 4, 6, 8 und 9 in einer außenseitigen Einbuchtung EBU am Innengehäuse IG des Sorptionsbehälters SB im Höhenlagebereich der Heizungseinrichtung HZ vorgesehen. Sie umfasst mindestens eine elektrischen Thermoschalter TSA und/oder mindestens eine Schmelzsicherung SSI (siehe Figur 17). Der elektrische Thermoschalter TSA und/oder die Schmelzsicherung SSI der elektrischen Temperaturschutzeinheit TSI sind jeweils, vorzugsweise in Reihe, in mindestens eine Stromzuführleitung UB1, UB2 der Heizungseinrichtung HZ eingefügt (siehe Figur 8).

Weiterhin kann es zweckmäßig sein, mindestens eine Steuereinrichtung HE, ZE vorzusehen (siehe Figur 16), die insbesondere im Fehlerfall die Energiezufuhr zur Heizungseinrichtung HZ unterbricht. Ein Fehlerfall ist beispielsweise durch das Überschreiten einer Temperaturobergrenze gebildet.

Als thermische Überhitzungschutzeinrichtung kann ferner auch die weitgehend frei hängende Aufhängung des Sorptionsbehälters, insbesondere unterhalb des Bodens BO des Spülbehälters SPB, dienen.

Die thermische Überhitzungschutzeinrichtung kann weiterhin eine Lagerung des Sorptionsbehälters SB derart umfassen, dass der Sorptionsbehälter SB gegenüber benachbarten Komponenten und/oder Teilen einer Bodenbaugruppe BG einen vorgegebenen Mindestspaltabstand LSP aufweist.

Als thermische Überhitzungschutzeinrichtung kann zusätzlich oder unabhängig zu oben angegebenen Maßnahmen zumindest im Bereich der Sorptionseinheit SE des Sorptionsbehälters SB mindestens ein Außengehäuse AG zusätzlich zum Innengehäuse IG des Sorptionsbehälters SB vorgesehen sein. Zwischen dem Innengehäuse IG und dem Außengehäuse AG ist dabei ein Luftspaltfreiraum LS als Wärmeisolationsschicht vorhanden.

Die Rohrschlangenheizung HZ der Figuren 4, 7, 8, 9 weist zwei Anschlusspole AP1, AP2, auf, die durch entsprechende Durchgangsöffnungen im Gehäuse des Spülbehälters SB nach außen hindurch geführt sind. Jeder Anschlusspol bzw. Anschlussstift AP1, AP2 ist vorzugsweise in Reihe mit einem Überhitzungsschutzelement geschaltet. Die Überhitzungsschutzelemente sind in der Temperatursicherungseinheit TSI zusammengefasst, die außen am Gehäuse des Sorptionsbehälters SB in der Nähe zu den beiden Polstiften AP1, AP2 angeordnet ist. Figur 17 zeigt die

Überhitzungsabsicherungsschaltung für die Rohrschlangenheizung HZ von Figur 8. An dem ersten, starren Polstift AP1 ist mittels einer Schweißverbindung SWE1 die erste Überbrückungsleitung UB1 angebracht. In entsprechender Weise ist am zweiten, starren Polstift AP2 mittels einer Schweißverbindung SWE2 die zweite Überbrückungsleitung UB2 befestigt. Mittels einer Steckverbindung SV4 ist die Überbrückungsleitung UP2 mit dem Thermoschalter TSA elektrisch kontaktiert. Die Überbrückungsleitung UB1 ist über einen Steckkontakt SV3 mit der thermoelektrischen Schmelzsicherung SSI elektrisch verbunden. Eingangsseitig ist über eine Steckverbindung SV1 eine erste Stromzuführleitung SZL1 mit einer nach außen geführten Anschlussfahne AF1 des Schmelzsicherungselements SSI verbunden. In entsprechender Weise ist eine zweite Stromzuführleitung SZL2 über eine Steckverbindung SV2 an die nach außen geführte Anschlussfahne AF2 des Thermoschalterelements TSA verbunden. Insbesondere kann die zweite Stromzuführleitung SZL2 einen Nullleiter bildet, während die erste Stromzuführleitung SZL1 eine "spannungsführende Phase" sein kann. Der Thermoschalter TSA öffnet sich, sobald eine erste Obergrenze für die Temperatur der Rohrschlangenheizung HZ überschritten wird. Sobald diese wieder unterschritten wird, schließt er wieder, so dass die Rohrschlangenheizung HZ erneut aufgeheizt wird. Wird jedoch eine kritische Temperaturobergrenze, die über der ersten Obergrenze liegt, für die Rohrschlangenheizung HZ erreicht, so schmilzt die Schmelzsicherung SSI durch und der Stromkreis für die Rohrschlangenheizung HZ wird dauerhaft unterbrochen. Die beiden Temperatursicherungselemente der Temperatursicherungseinrichtung TSI stehen in weitgehend innigem, wärmeleitendem Kontakt mit dem Innengehäuse IG des Sorptionsbehälters. Sie können separat voneinander ausgelöst werden, wenn bestimmte, ihnen spezifisch zugeordnete Temperaturobergrenzen überschritten werden.

Entsprechend den Figuren 10, 13, 14 tritt der Ausströmstutzen AKT der mit der Auslassöffnung AO im Sockel SO des Sorptionsbehälters SB verbunden ist, durch die Durchgangsöffnung GK des Bodens BO vorzugsweise in einem Eckbereich EBR des Spülbehälters SPB hindurch, der außerhalb der vom Sprüharm SA überstrichenen Rotationsfläche liegt. Dies ist in Figur 2 veranschaulicht. Allgemein ausgedrückt ragt also der Ausströmstutzen AKT aus dem Boden BO an eine Stelle in den Innenraum des Spülbehälters SPB, die außerhalb der vom unteren Sprüharm SA erfassten Rotationsfläche liegt. Der Ausblaskaminstutzen bzw. der Ausströmstutzen AKT ist entlang seinem oberen Endabschnitt von einer Spritzschutzhaube SH überdeckt bzw. überstülpt.

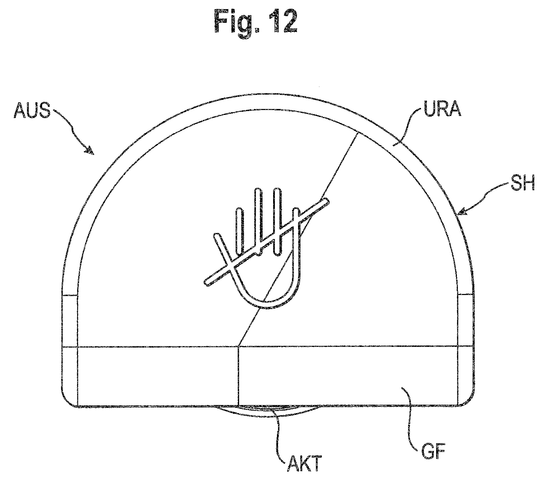

Die Spritzschutzhaube SH überstülpt den Ausströmstutzen AKT schirmartig oder pilzartig. Diese ist von oben betrachtet (siehe Figur 12) oberseitig komplett geschlossen; insbesondere ist sie auch an ihrer Unterseite in einem dem Sprüharm SA zugewandten Bereich vollständig geschlossen. Sie weist hier im Ausführungsbeispiel in erster Annäherung eine halbkreiszylinderförmige Geometrieform auf. Die Spritzschutzhaube SH ist in der Figur 12 schematisch von oben betrachtet dargestellt. An ihrer Oberseite weist sie in den Übergangszonen GF, URA zwischen ihrer weitgehend planflächigen Oberseite und ihren im Wesentlichen vertikal nach unten abstehenden Seitenwänden (von innen nach außen betrachtet) konvex gewölbte Abflachungen GF (siehe Figur 13) auf. Trifft ein Sprühstrahl aus dem Sprüharm SA diese randoberseitig abgeflachten bzw. gewölbten Übergangszonen GF, URA, so ergießt sich dieser filmartig weitgehend vollflächig über die Spritzschutzhaube SH und kühlt diese beim Desorptionsvorgang ab.

Um zu vermeiden, dass Flüssigkeit beim Sprühen mit dem unteren Sprüharm SA durch die Austrittsöffnung des Ausströmstutzen AKT in den Sorptionsbehälter SB gelangt, ist eine untere Randzone UR der halbkreiszylinder-abschnittsartigen Seitenwand der Spritzschutzhaube SH nach innen in Richtung auf den Ausströmstutzen AKT zu gekrümmt bzw. gewölbt. Dies ist gut aus Figur 13 ersichtlich. Darüber hinaus ist im Bereich der Oberkante des Ausströmstutzens AKT ein umlaufendes, radial nach außen abstehendes Spritzwasserabweiseelement bzw. Abschirmelement PB, insbesondere Prallblech, vorgesehen. Dieses steht radial nach außen in den Zwischenraum bzw. Spaltraum zwischen dem kreiszylinderförmigen Ausströmstutzen AKT und der Innenwand der Spritzschutzhaube SH ab. Dabei verbleibt zwischen der Außenrandkante dieses Abschirmelements PB und der Innenwand der Spritzschutzhaube SH eine freie Durchgangsöffnung für eine Luftströmung, die aus dem Ausströmstutzen AKT in Richtung Decke der Spritzschutzhaube SH ausströmt und dabei nach unten zum unteren Rand UR der Spritzschutzhaube SH, insbesondere um etwa 180 °, umgeleitet wird. Der Umlenkweg ist in Figur 13 mit ALS bezeichnet. Das nach außen abstehende Abschirmelement PB ist im Ausführungsbeispiel von Figur 13 an einzelnen Umfangsstellen seiner Außenkante mittels Stegelemente SET gegenüber der Innenwand der in Form eines Ringsegmentabschnitts umlaufenden Seitenwand der Spritzschutzhaube SH abgestützt. Die Spritzschutzhaube SH ist gegenüber dem Auslassstutzens AKT mit einem freien Höhenabstand unter Bildung eines Freiraums bzw. Hohlraums angeordnet.

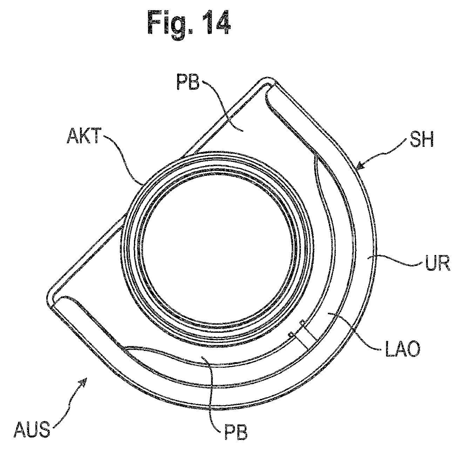

Figur 14 zeigt die Spritzschutzhaube SH von unten her betrachtet zusammen mit dem Ausströmstutzen AKT. Das Abschirmelement PB schirmt dabei die Austrittsöffnung des Ausströmstutzens AKT als lateral bzw. seitlich abstehender Rand bzw. Steg im Wesentlichen ringsum ab. Insbesondere schließt das Abschirmelement PB die Unterseite der Spritzschutzhaube SH im Bereich der geradlinigen, dem Sprüharm SA zugewandten, Seitenwand ab. Lediglich im halbkreisförmig gebogenen Abschnitt der Spritzschutzhaube SH zwischen dem Abschirmelement PB und der dazu radial versetzt verlaufenden, außen konzentrisch angeordneten Seitenwand der Spritzschutzhaube SH ist ein Spaltfreiraum LAO freigegeben, durch den die Luft aus dem Ausströmstutzen AKT ins Innere des Spühlbehälters SPB ausströmen kann. Hier im Ausführungsbeispiel von Figur 14 ist der Spaltfreiraum LAO im Wesentlichen sichelartig ausgebildet. Die Luftströmung LS2 wird dadurch auf einen Umlenkweg ALS gezwungen, die sie von ihrer vertikalen nach oben gerichteten Ausströmrichtung nach unten umlenkt, wo sie erst durch den sichelförmigen, teilkreisabschnittförmigen Spaltfreiraum LAO im unteren Bereich der Spritzschutzhaube SH austreten kann. Der Ausströmstutzen AKT steht zweckmäßiger Weise mit einer derartigen Höhe HO gegenüber dem Boden BO ab, dass seine Oberkante höher als der Pegel einer für eine Spülvorgang vorgesehene Soll-Spülbad-Gesamtmenge oder - Schaummenge liegt.

Das Ausströmelement AUS, das ausgangsseitig am Sorptionsbehälter SB angebracht ist, und in den Innenraum des Spülbehälters SPB ragt, ist also zweckmäßigerweise derart ausgebildet, dass die aus ihm austretende Luftströmung LS2 vom Sprüharm SA weggerichtet ist. Insbesondere wird die ausströmende Luftströmung LS2 in einen hinteren bzw. rückwärtigen Eckbereich zwischen der Rückwand RW und der angrenzenden Seitenwand SW des Spülbehälters gelenkt. Auf diese Weise wird weitgehend vermieden, dass Spritzwasser oder Schaum beim Reinigungsvorgang oder einem sonstigen Spülvorgang durch die Öffnung des Ausströmstutzens in das Innere des Sorptionsbehälters gelangen kann. Dadurch könnte der Desorptionsvorgang beeinträchtigt oder ganz zunichte gemacht werden. Darüber hinaus könnte durch Spülflüssigkeit Sorptionsmaterial dauerhaft geschädigt werden. Denn umfangreiche Tests haben gezeigt, dass die Funktionstüchtigkeit des Sorptionsmaterials im Sorptionsbehälter über die Lebensdauer der Geschirrspülmaschine weitgehend erhalten bzw. bewahrt werden kann, wenn zuverlässig verhindert ist, dass kein Wasser, Reinigungsmittel, und/oder Klarspüler im Spülwasser in das Sorptionsmaterial gelangen kann.

Zusammenfassend betrachtet ist mindestens eine Ausströmvorrichtung AUS, die mit mindestens einer Ausströmöffnung AO des Sorptionsbehälters SB verbunden ist, derart im Inneren des Spülbehälters SPB angeordnet, das von ihr ausgeblasene Luft LS2 von mindestens einer im Spülbehälter SPB untergebrachten Sprüheinrichtung SA weitgehend weggerichtet ist. Die Ausströmvorrichtung AUS ist dabei außerhalb des Arbeitsbereichs der Sprüheinrichtung SA angeordnet. Die Sprüheinrichtung kann z.B. ein rotierender Sprüharm SA sein. Die Ausströmvorrichtung AUS ist vorzugsweise in einem hinteren Eckbereich EBR zwischen der Rückwand RW und einer angrenzenden Seitenwand SW des Spülbehälters SPB vorgesehen. Die Ausströmvorrichtung AUS weist insbesondere eine Ausblasöffnung ABO mit einem Höhenabstand HO über dem Boden BO des Spülbehälters SPB auf, der höher als der Pegel einer für einen Spülvorgang vorgesehenen Soll- Spülbadgesamtmenge liegt. Die Ausströmvorrichtung AUS umfasst einen Ausströmstutzen AKT und eine Spritzschutzhaube SH. Die Spritzschutzhaube SH weist eine die Ausblasöffnung ABO des Ausströmstutzens AKT überstülpende Geometrieform aufweist. Die Spritzschutzhaube SH ist über den Ausströmstutzen AKT derart übergestülpt, dass durch den Ausströmstutzen AKT aus dem Sorptionsbehälter SB mit einer aufsteigenden Strömungsrichtung hochströmende Luft nach ihrem Austritt aus der Ausblasöffnung ABO des Ausströmstutzens AKT eine abwärtsweisenden Zwangsströmungweg ALS aufprägbar ist. Der oberhalb des Bodens BO des Spülbehälters SPB nach oben abstehende Ausströmstutzen AKT ist mit dem Anschlussstutzen STE am Deckelteil DEL des unter dem Boden BO angeordneten Sorptionsbehälters SB gekoppelt. Die Spritzschutzhaube SH ist in ihrem der Sprüheinrichtung SA zugewandten Gehäusebereich GF oberseitig sowie unterseitig geschlossen ausgebildet. Die Spritzschutzhaube SH überdeckt die Ausblasöffnung ABO des Ausströmstutzens AKT mit einem oberen Freiraum. Der Ausströmstutzen AKT weist dabei einen oberen, nach außen gewölbten Rand bzw. ringsumlaufenden Kragen KR auf. Die Spritzschutzhaube SH umhüllt einen oberen Endabschnitt des Ausströmstutzens AKT derart, dass zwischen ihrer Innenwandung und der Außenwandung des Ausströmstutzens AKT ein Spaltfreiraum SPF gebildet ist. Der Spaltfreiraum SPF zwischen der Spritzschutzhaube SH und dem Ausströmstutzen AKT ist derart ausgebildet, dass ein Luftausströmweg ALS aus dem Ausströmstutzen AKT bereitgestellt ist, der von der Sprüheinrichtung SA im Spülbehälter SB weggerichtet ist. Am Ausströmstutzen AKT ist ein in den Spaltfreiraum SPF hineinragendes Spritzwasserabweiselement PB vorgesehen. Eine untere Randzone UR der Spritzschutzhaube SH ist nach innen gewölbt. Die Spritzschutzhaube SH weist eine derartig abgerundete Außenoberfläche auf, dass sie einen auftreffenden Sprühstrahl der Sprüheinrichtung SA sich filmartig über ihre Oberfläche ergießen lässt.

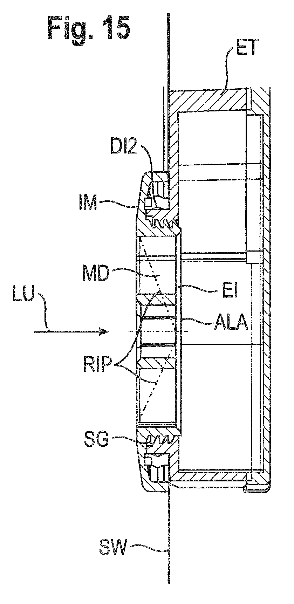

Figur 15 zeigt eine schematische Längsschnittdarstellung der Fixierung des einlassseitigen, stirnseitigen Endabschnitts ET des Luftführungskanals LK im Bereich der Auslassöffnung ALA in der Seitenwand SW des Spülbehälters SPB von Figur 2. Der stirnseitige Endabschnitt ET des Luftführungskanal LK ragt in das Innere des Spülbehälters SPB derart hinein, dass ein ringsum, gegenüber der Seitenwand SW senkrecht abstehender Kragenrand gebildet ist. Dieser weist ein Innengewinde SG auf. In dieses Innengewinde SG ist ein ringförmiges Einlasselement IM mit einem Außengewinde angeschraubt. Es fungiert also als Fixierungselement zum Festhalten des Endabschnitts ET. Dieses kreisringförmige Fixierungselement weist eine torusförmige, ringsumlaufende Aufnahmekammer für ein Dichtungselement DI2 auf. Dieses Dichtungselement DI2 dichtet einen Ringspalt zwischen dem Außenrand des einlassseitigen, stirnseitigen Endabschnitts ET des Luftführungskanals LK und dem Fixierungselement ab. Das Fixierungselement ist hier im Ausführungsbeispiel insbesondere durch einen überwurfmutterartigen Schraubring gebildet, der mit dem einlassseitigen, stirnseitigen Endabschnitt ET des Luftführungskanals LK verschraubt ist. Im Ausführungsbeispiel weist das ringförmige Fixierungselement IM einen mittigen Durchgang MD auf, durch den Luft LU aus dem Innenraum des Spülbehälters SPB angesaugt werden kann.

Gegebenenfalls kann es auch zweckmäßig sein, in/ oder vor der Eingangsöffnung MD des einlassseitigen Rohrabschnitts ET des Luftführungskanals LK mindestens einen rippenförmigen Eingriffsschutz vorzusehen, der zwischen seinen Eingriffsrippen RIP frei durchgängige Spalten zum Einströmen von Luft aus dem Spülbehälter aufweist. In der Figur 15 sind diese Rippen RIP strichpunktiert angedeutet.

Figur 16 zeigt in schematischer Draufsichtsdarstellung die Bodenbaugruppe BG. Sie umfasst zusätzlich zur Lüftereinheit LT, zum Sorptionsbehälter SB, zur Umwälzpumpe UWP, usw.... eine Hauptsteuereinrichtung HE zu deren Steuerung und Kontrolle. Auch die Heizungseinrichtung HZ des Sorptionsbehälter SB wird für dessen Desorptionsvorgang mittels mindestens einer Steuereinrichtung reguliert. Diese ist hier im Ausführungsbeispiel durch eine Zusatzsteuereinrichtung ZE gebildet. Sie dient dazu, die Stromversorgungsleitung SZL zur Heizungseinrichtung HZ je nach Bedarf zu unterbrechen oder durchzuschalten. Die Zusatzsteuereinrichtung ZE wird von der Hauptsteuereinrichtung HE aus über eine Busleitung BUL angesteuert. Von der Hauptsteuereinrichtung HE ist eine Stromversorgungsleitung SVL zur Zusatzsteuereinrichtung ZE geführt. Diese steuert über eine Steuerleitung SLL auch die Lüftereinheit LT an. In die Steuerleitung SLL kann insbesondere auch die Stromversorgungsleitung der Lüftereinheit LT mit integriert sein.

An die Hauptsteuereinrichtung HE ist über eine Signalleitung auch mindestens ein Temperatursensor TSE (siehe Figur 2) angeschlossen, der korrespondierende Messsignale für die Temperatur im Innenraum des Spülbehälters an die Hauptsteuereinrichtung liefert. Der Temperatursensor TSE ist dabei zwischen Versteifungsrippen VR (siehe Figur 3) im Zwischenraum zwischen den beiden Schenkeln des einlassseitigen Rohrabschnitts RA1 des Luftführungskanals LK aufgehängt. Dabei wird er in Kontakt mit der Seitenwand SW des Spülbehälters SPB gebracht.

Sobald nun ein Reinigungsvorgang gestartet wird, schaltet gleichzeitig die Hauptsteuereinrichtung HE über die Busleitung BUL die Zusatzsteuereinrichtung ZE derart an, dass eine elektrische Spannung über die Stromverbindungsleitung SZL an die Polstifte AP1, AP2 der Heizungseinrichtung HZ angelegt ist. Sobald im Innenraum des Spülbehälters SPB eine bestimmte vorgegebene Temperaturobergrenze erreicht ist, was die Hauptsteuereinrichtung HE über die Messsignale des Temperatursensors feststellen kann, kann sie der Zusatzsteuereinrichtung ZE über die Busleitung BUL die Anweisung geben, die Spannung an der Stromzufuhrleitung SZL wegzunehmen und dadurch die Heizungseinrichtung HZ komplett auszuschalten. Damit kann z.B. der Desorptionsvorgang für das Sorptionsmaterial im Sorptionsbehälter beendet werden.

Gegebenenfalls kann es zweckmäßig sein, für eine Bedienperson der Geschirrspülmaschine die Option vorzusehen, über die Aktivierung bzw. Deaktivierung einer eigens vorgesehenen Programmtaste oder entsprechender Auswahl eines Programmmenüs das Sorptionstrockensystem TS zu aktivieren oder zu deaktivieren. In Figur 16 ist dies schematisch dadurch veranschaulicht, dass eine Programmtaste bzw. ein Programmmenüpunkt PG1 eingezeichnet ist, die über eine Steuerleitung SL1 mittels Steuersignale SS1 der Steuerlogik HE entsprechende Aktivierungs- bzw. Deaktivierungssignale zum Ein- und Ausschalten des Sorptionstrockensystems TE gibt.

Insbesondere kann im Bedienfeld der Geschirrspülmaschine eine erste Auswahltaste zur Auswahl einer Programmvariante "Energie" oder "Sorptionsbetrieb" vorgesehen sein. Bei diesem Programm liegt der Schwerpunkt auf Einsparung von Energie. Dies wird dadurch erreicht, dass beim Klarspülvorgang überhaupt nicht mittels eines Durchlauferhitzers geheizt wird und die Trocknung des Spülguts, insbesondere des Geschirrs, allein mit Hilfe des Sorptionstrocknungssystems TS bewirkt wird.

Zweckmäßig kann es insbesondere sein, zusätzlich zur reinen Sorptionstrocknung den Innenraum des Spülbehälters durch aufgeheizte Klarspülflüssigkeit beim Klarspülvorgang aufzuheizen. Dabei kann es in vorteilhafter Weise ausreichend sei, wenn der durch den Klarspülvorgang bewirkte Wärmeübertrag auf das zu trocknende Spülgut mit einem geringeren Energieeinsatz als im Fall ohne Sorptionstrocknung erfolgt. Denn durch das nun verwendete Sorptionstrocknungssystem lässt sich durch Sorption von Luftfeuchtigkeit lässt sich elektrische Heizenergie einsparen. Es kann also sowohl durch sogenannte "Eigenwärmetrocknung" als auch durch Sorptiontrocknung, d.h. durch eine Kombination bzw. Ergänzung von beiden Trocknungsarten, eine verbesserte Trocknung von nassem oder feuchtem Spülgut erreicht werden.

Zusätzlich oder unabhängig von der Taste "Energie" kann eine weitere Taste "Trocknungsleistung" im Bedienfeld der Geschirrspülmaschine vorgesehen sein, die die Gebläselaufzeit der Lüftereinheit erhöht. Hierdurch kann eine verbesserte Trocknung aller Geschirrteile erreicht werden.

Zusätzlich oder unabhängig von den obigen speziellen Tasten kann eine weitere Taste "Programmlaufzeit" vorgesehen sein. Wenn das Sorptionstrocknungssystem zugeschaltet wird, kann die Programmlaufzeit gegenüber herkömmlichen Trocknungssystemen (ohne Sorptionstrocknung) erniedrigt werden. Ggf. kann durch zusätzliches Aufheizen in der Reinigungsphase und optional durch Erhöhung des Sprühdrucks durch Erhöhung der Motordrehzahl der Umwälzpumpe die Laufzeit beim Reinigen weiter verkürzt werden. Des Weiteren kann auch durch eine Erhöhung der Klarspültemperatur die Trocknungszeit weiter verkürzt werden.

Zusätzlich oder unabhängig von den vorherigen spezifischen Tasten kann eine Betätigungstaste mit der Funktion "Beeinflussung der Reinigungsleistung" vorgesehen sein. Bei Betätigung dieser Taste kann bei gleichbleibender Laufzeit die Reinigungsleistung erhöht werden, ohne dass sich der Energieverbrauch gegenüber einer Geschirrspülmaschine ohne Sorptionstrocknungssystem erhöht. Denn dadurch, dass beim Reinigungsvorgang zugleich der Sorptionsvorgang gestartet wird und dadurch heiße Luft, die mit einer aus dem Sorptionsmaterial ausgetretenen Wassermenge beladen ist, in den Spülbehälter gelangt, kann Heizenergie zum Aufheizen einer gewünschten Spülbad-Gesamtflüssigkeitsmenge eingespart werden.

## Patentansprüche

1. Geschirrspülmaschine (GS), insbesondere Haushaltsgeschirrspülmaschine, mit mindestens einem Spülbehälter (SPB) und mindestens einem Sorptionstrocknungssystem (TS) zum Trocknen von Spülgut, wobei das Sorptionstrocknungssystem (TS) mindestens einen Sorptionsbehälter (SB) mit reversibel dehydrierbarem Sorptionsmaterial (ZEO) aufweist, der über mindestens einen Luftführungskanal (LK) mit dem Spülbehälter (SPB) zur Erzeugung einer Luftströmung (LS1) verbunden ist,
wobei das Sorptionsmaterial (ZEO) im Sorptionsbehälter (SB) derart in Form einer Sorptionseinheit (SE) gelagert ist, dass im Wesentlichen jede Eintrittsstelle der Durchtrittsquerschnittsfläche (SDF) der Sorptionseinheit (SE) mit einem im Wesentlichen gleichen Luftvolumenstromwert beaufschlagbar ist,
und wobei in Durchströmungsrichtung (DSR) des Sorptionsbehälters (SB) betrachtet vor dessen Sorptionseinheit (SE) mindestens eine Heizungseinrichtung (HZ) vorgesehen ist,
**dadurch gekennzeichnet,**
**dass** ein oder mehrere Strömungskonditionierungselemente (SK) derart im Sorptionsbehälter (SB) und/oder in einem eingangsseitigen Rohrabschnitt (VA, ES) des Luftführungskanals (LK) vorgesehen sind, dass eine Vergleichmäßigung des örtlichen Strömungsquerschnittsprofils der Luftströmung (LS2) beim Durchströmen des Sorptionsbehälters (SB) in dessen Durchströmungsrichtung (DSR) bewirkt ist, wobei in Durchströmungsrichtung (DSR) des Sorptionsbehälters (SB) betrachtet in dessen unterem Hohlraum (UH) mindestens ein Strömungskonditionierungselement (SK) mit Höhenabstand vor der Heizungseinrichtung (HZ) vorgesehen ist, und wobei Luftdurchlässe, insbesondere Schlitze (SL), im Strömungskonditionierungselement (SK) an denjenigen Orten, an denen die in den Sorptionsbehälter (SB) eintretende Luftströmung (LS1) in Durchströmungsrichtung (DSR) des Sorptionsbehälters (SB) eine geringere Geschwindigkeit aufweist, größer als an denjenigen Orten ausgebildet ist, an denen die in den Sorptionsbehälter (SB) eintretende Luftströmung (LS1) in Durchströmungsrichtung (DSR) des Sorptionsbehälters (SB) eine größere Geschwindigkeit aufweist.

2. Geschirrspülmaschine nach Anspruch 1, **dadurch gekennzeichnet, dass** als Sorptionsmaterial (ZEO) ein Aluminium- und/oder Siliziumoxid enthaltendes, reversibel dehydrierbares Material, Silicagel, und/oder Zeolith, insbesondere Zeolith vom Typ A, X, Y allein oder in beliebiger Kombination, vorgesehen ist.

3. Geschirrspülmaschine nach einem der Ansprüche 1 der 2, **dadurch gekennzeichnet, dass** das Sorptionsmaterial (ZEO) im Sorptionsbehälter (SB) in Form eines körnigen Feststoffes oder Granulats mit einer Vielzahl von Partikelkörpern mit einer Körnungsgröße im Wesentlichen zwischen 1 und 6 mm, insbesondere zwischen 2,4 und 4,8 mm, als Schüttung vorgesehen ist, und dass die Schütthöhe (H) der Partikelkörper mindestens dem 5- fachen deren Körnungsgröße entspricht.

4. Geschirrspülmaschine nach mindestens einem der vorhergehenden Ansprüche, **dadurch gekennzeichnet, dass** das als körniger Feststoff oder Granulat vorliegende Sorptionsmaterial (ZEO) in Schwerkraftrichtung im Sorptionsbehälter (SB) mit einer Schütthöhe (H) vorliegt, die im Wesentlichen dem 5 - bis 40 - fachen, insbesondere dem 10 - bis 15 - fachen, der Partikelgröße des körnigen Feststoffs oder Granulats entspricht.

5. Geschirrspülmaschine nach mindestens einem der vorhergehenden Ansprüche, **dadurch gekennzeichnet, dass** die Schütthöhe (H) des Sorptionsmaterials (ZEO) im Wesentlichen zwischen 1,5 und 25 cm, insbesondere zwischen 2 und 8 cm, bevorzugt zwischen 4 und 6 cm, gewählt ist.

6. Geschirrspülmaschine nach mindestens einem der vorhergehenden Ansprüche, **dadurch gekennzeichnet, dass** der körnige Feststoff oder das Granulat aus einer Vielzahl von im Wesentlichen kugelförmigen Partikelkörpern gebildet ist.

7. Geschirrspülmaschine nach mindestens einem der vorhergehenden Ansprüche, **dadurch gekennzeichnet, dass** das als körniger Feststoff oder Granulat ausgebildete Sorptionsmaterial (ZEO) eine mittlere Schüttdichte von mindestens 500 kg/m³, insbesondere im Wesentlichen zwischen 500 und 800 kg/m³, insbesondere zwischen 600 und 700 kg/m³, insbesondere zwischen 630 bis 650 kg/m³, insbesondere bevorzugt von etwa 640 kg/m³, aufweist.

8. Geschirrspülmaschine nach mindestens einem der vorhergehenden Ansprüche, **dadurch gekennzeichnet, dass** im Sorptionsbehälter (SB) das reversibel dehydrierbare Sorptionsmaterial (ZEO) zur Absorption einer in der Luftströmung (LS1) transportierten Feuchtigkeitsmenge mit einer derartigen Gewichtsmenge vorgesehen ist, dass die durch das Sorptionsmaterial (ZEO) absorbierte Feuchtigkeitsmenge geringer als eine auf das Spülgut aufgebrachte Flüssigkeitsmenge, insbesondere eine im Klarspülschritt aufgebrachte Flüssigkeitsmenge, ist.

9. Geschirrspülmaschine nach mindestens einem der vorhergehenden Ansprüche, **dadurch gekennzeichnet, dass** im Sorptionsbehälter (SB) das reversibel dehydrierbare Sorptionsmaterial mit einer derartigen Gewichtsmenge vorgesehen ist, dass diese ausreicht, eine Feuchtigkeitsmenge zu absorbieren, die im Wesentlichen einer Benetzungsmenge entspricht, mit der das Spülgut nach dem Ende eines Klarspülschritts benetzt ist.

10. Geschirrspülmaschine nach mindestens einem der vorhergehenden Ansprüche, **dadurch gekennzeichnet, dass** die absorbierte Wassermenge zwischen 4 und 25 %, insbesondere zwischen 5 und 15 %, der auf das Spülgut aufgebrachten Flüssigkeitsmenge entspricht.

11. Geschirrspülmaschine nach mindestens einem der vorhergehenden Ansprüche, **dadurch gekennzeichnet, dass** im Sorptionsbehälter (SB) eine Gewichtsmenge im Wesentlichen zwischen 0,2 und 5 kg, insbesondere zwischen 0,3 und 3 kg, bevorzugt zwischen 0,5 und 2,5 kg, an Sorptionsmaterial (ZEO) untergebracht ist.

12. Geschirrspülmaschine nach mindestens einem der vorhergehenden Ansprüche, **dadurch gekennzeichnet, dass** das Sorptionsmaterial (ZEO) Poren mit einer Größe im Wesentlichen zwischen 1 und 12 Angström, insbesondere zwischen 2 und 10, bevorzugt zwischen 3 und 8 Angström, aufweist.

13. Geschirrspülmaschine nach mindestens einem der vorhergehenden Ansprüche, **dadurch gekennzeichnet, dass** das Sorptionsmaterial (ZEO) eine Wasseraufnahmekapazität im Wesentlichen zwischen 15 und 40, bevorzugt zwischen 20 und 30 Gewichtsprozent seines Trockengewichts aufweist.

14. Geschirrspülmaschine nach mindestens einem der vorhergehenden Ansprüche, **dadurch gekennzeichnet, dass** ein Sorptionsmaterial (ZEO) vorgesehen ist, das bei einer Temperatur im Wesentlichen im Bereich zwischen 80°. und 450°C, insbesondere zwischen 220° und 250°C, desorbierbar ist.

15. Geschirrspülmaschine nach mindestens einem der vorhergehenden Ansprüche, **dadurch gekennzeichnet, dass** der Luftführungskanal (LK), der Sorptionsbehälter (SB), und/oder ein oder mehrere zusätzliche Strömungsbeeinflussungselemente (LT, SK) derart ausgebildet sind, dass durch das Sorptionsmaterial (ZEO) zu dessen Sorption und/oder Desorption eine Luftströmung (LS2) mit einem Volumenstrom im Wesentlichen zwischen 2 und 15 I/sec, insbesondere zwischen 4 und 7 I/sec bewirkbar ist.

16. Geschirrspülmaschine nach mindestens einem der vorhergehenden Ansprüche, **dadurch gekennzeichnet, dass** dem Sorptionsmaterial (ZEO) mindestens eine Heizungseinrichtung (HZ) zugeordnet ist, mit der eine äquivalente Heizleistung zwischen 250 bis 2500 W, insbesondere zwischen 1000 und 1800 W, bevorzugt zwischen 1200 und 1500 W, zum Aufheizen des Sorptionsmaterials (ZEO) für dessen Desorption bereitstellbar ist.

17. Geschirrspülmaschine nach mindestens einem der vorhergehenden Ansprüche, **dadurch gekennzeichnet, dass** das Verhältnis von Heizleistung mindestens einer Heizungseinrichtung (HZ), die dem Sorptionsmaterial (ZEO) zu dessen Desorption zugeordnet ist, und Luftvolumenstrom der Luftströmung (LS2), die das Sorptionsmaterial durchströmt, zwischen 100 und 1250 W sec/l, insbesondere zwischen 100 und 450 W sec/l, bevorzugt zwischen 200 und 230 W sec/l, gewählt ist.

18. Geschirrspülmaschine nach mindestens einem der vorhergehenden Ansprüche, **dadurch gekennzeichnet, dass** im Sorptionsbehälter (SB) für das Sorptionsmaterial (ZEO) eine Durchtrittsquerschnittsfläche im Wesentlichen zwischen 80 und 800 cm², insbesondere zwischen 150 und 500 cm², vorgesehen ist.

19. Geschirrspülmaschine nach mindestens einem der vorhergehenden Ansprüche, **dadurch gekennzeichnet, dass** die Schütthöhe (H) des Sorptionsmaterials (ZEO) über die Eintrittsquerschnittsfläche (SDF) der Sorptionseinheit (SE) des Sorptionsbehälters (SB) im Wesentlichen konstant ist.

20. Geschirrspülmaschine nach mindestens einem der vorhergehenden Ansprüche, **dadurch gekennzeichnet, dass** der Sorptionsbehälter (SB) in einer Bodenbaugruppe (BG) unterhalb des Bodens (BO) des Spülbehälters (SPB) untergebracht ist.

21. Geschirrspülmaschine nach mindestens einem der vorhergehenden Ansprüche, **dadurch gekennzeichnet, dass** der Luftführungskanal (LK) weitgehend außerhalb des Spülbehälters (SPB) angeordnet ist.

22. Geschirrspülmaschine nach mindestens einem der vorhergehenden Ansprüche, **dadurch gekennzeichnet, dass** in Strömungsrichtung betrachtet vor dem Sorptionsbehälter (SB) mindestens eine Lüftereinheit (LT) in den einlassseitigen Rohrabschnitt (RA1) des Luftführungskanals (LK) zur Erzeugung einer Zwangsluftströmung (LS1) in Richtung auf die mindestens eine Eintrittsöffnung (EO) des Sorptionsbehälters (SB) zu eingefügt ist.

23. Geschirrspülmaschine nach Anspruch 22, **dadurch gekennzeichnet, dass** die Lüftereinheit (LT) in der Bodenbaugruppe (BG) unterhalb des Spülbehälters (SPB) angeordnet ist.

24. Geschirrspülmaschine nach mindestens einem der vorhergehenden Ansprüche, **dadurch gekennzeichnet,**
**dass** der Luftführungskanal (LK) mit dem Sorptionsbehälter (SB) derart gekoppelt ist, dass die Luftströmung (LS1) im bodennahen Bereich des Sorptionsbehälters (SB) mit einer Einströmungsrichtung (ESR) einmündet und in eine davon verschiedene Durchströmungsrichtung (DSR) wechselt, mit der sie das Innere des Sorptionsbehälters (SB) durchströmt.

25. Geschirrspülmaschine nach mindestens einem der vorhergehenden Ansprüche, **dadurch gekennzeichnet, dass** der einlassseitige Rohrabschnitt (RA1) des Luftführungskanals (LK) in den Sorptionsbehälter (SB) derart einmündet, dass seine Einströmungsrichtung (ESR) in die Durchströmungsrichtung (DSR) des Sorptionsbehälters (SB), insbesondere um etwa 90°, umgelenkt ist.

26. Geschirrspülmaschine nach mindestens einem der vorhergehenden Ansprüche, **dadurch gekennzeichnet,**
**dass** die Durchströmungsquerschnittsfläche (SDF) für das Sorptionsmaterial (ZEO) im Inneren des Sorptionsbehälters (SB) größer als die Durchtrittsquerschnittsfläche des Einlassstutzens (ES) des Luftführungskanals (LK) ausgebildet ist, mit der dieser in die Eintrittsöffnung (EO) des Sorptionsbehälters (SB) einmündet.

27. Geschirrspülmaschine nach mindestens einem der vorhergehenden Ansprüche, **dadurch gekennzeichnet,**
**dass** die Durchströmungsquerschnittsfläche (SDF) des Sorptionsbehälters (SB) zwischen dem 2- und 40- fachen, insbesondere zwischen dem 4- und 30- fachen, bevorzugt zwischen dem 5- und 25- fachen, größer als die Durchtrittsquerschnittsfläche des endseitigen Einlassstutzens (ES) des Luftführungskanals (LK) ausgebildet ist, mit der dieser in die Eintrittsöffnung (EO) des Sorptionsbehälters (SB) einmündet.

28. Geschirrspülmaschine nach mindestens einem der vorhergehenden Ansprüche, **dadurch gekennzeichnet,**
**dass** im Sorptionsbehälter (SB) mindestens eine Sorptionseinheit (SE) mit Sorptionsmaterial (ZEO) derart untergebracht ist, dass das Sorptionsmaterial (ZEO) im Wesentlichen in oder entgegen zur Schwerkraftrichtung mit Luft (LS1, LS2) durchströmbar ist, die über den Luftführungskanal (LK) aus dem Spülbehälter (SPB) in den Sorptionsbehälter (SB) geführt ist.

29. Geschirrspülmaschine nach mindestens einem der vorhergehenden Ansprüche,
**dadurch gekennzeichnet,**
**dass** die Sorptionseinheit (SE) mindestens ein unteres Siebelement oder Gitterelement (US) und mindestens ein oberes Siebelement oder Gitterelement (OS) in einem vorgebbaren Höhenabstand (H) voneinander aufweist, und dass das Raumvolumen zwischen den beiden Siebelementen oder Gitterelementen (US, OS) mit dem Sorptionsmaterial (ZEO) weitgehend vollständig ausgefüllt ist.

30. Geschirrspülmaschine nach mindestens einem der vorhergehenden Ansprüche, **dadurch gekennzeichnet,**
**dass** der Sorptionsbehälter (SB) entgegen zur Schwerkraftrichtung betrachtet mindestens eine Schichtung aus einer Heizungseinrichtung (HZ), nachgeordnetem Zwischenraum (ZR) und nachfolgender Sorptionseinheit (SE) aufweist.

31. Geschirrspülmaschine nach mindestens einem der vorhergehenden Ansprüche, **dadurch gekennzeichnet,**
**dass** der Sorptionsbehälter (SB) in seinem bodennahen, unteren Hohlraum (UH) mindestens eine Heizungseinrichtung (HZ) aufweist.

32. Geschirrspülmaschine nach mindestens einem der vorhergehenden Ansprüche, **dadurch gekennzeichnet,**
**dass** im Sorptionsbehälter (SB) das Sorptionsmaterial zur Absorption einer Wassermenge im Wesentlichen zwischen 150 und 400 ml, insbesondere zwischen 200 und 300 ml, ausgebildet ist.

## Claims

1. Dishwasher machine (GS), in particular a household dishwasher machine, comprising at least one washing compartment (SPB) and at least one sorption drying system (TS) for drying items to be washed, wherein the sorption drying system (TS) comprises at least one sorption compartment (SB) comprising reversibly dehydratable sorption material (ZEO), said compartment being connected to the washing compartment (SPB) by means of at least one air-guiding channel (LK) for the generation of an air flow (LS1),
wherein the sorption material (ZEO) in the sorption compartment (SB) is layered in the form of a sorption unit (SE) such that essentially each entry point of the inlet cross-sectional area (SDF) of the sorption unit (SE) is able to have an air volume flow value that is substantially the same applied to it,
and wherein, viewed in the through-flow direction (DSR) of the sorption compartment (SB), at least one heating device (HZ) is provided upstream of said compartment's sorption unit (SE),
**characterised in that**
one or more flow-conditioning elements (SK) are provided in the sorption compartment (SB) and/or in an inlet-end tube portion (VA, ES) of the air-guiding channel (LK) such that equalisation of the local flow cross-sectional profile of the air flow (LS2) is effected when flowing through the sorption compartment (SB) in the through-flow direction (DSR) thereof,
wherein, viewed in the through-flow direction (DSR) of the sorption compartment (SB), at least one flow-conditioning element (SK) is provided in the lower cavity (UH) of the sorption compartment (SB) at a vertical distance (H) upstream of the heating device (HZ),
and wherein air passages, in particular slots (SL), in the flow-conditioning element (SK) are embodied so as to be larger, at those locations at which the air flow (LS1) entering the sorption compartment (SB) in the through-flow direction (DSR) of the sorption compartment (SB) has a lower velocity, than at those locations at which the air flow (LS1) entering the sorption compartment (SB) in the through-flow direction (DSR) of the sorption compartment (SB) has a greater velocity.

2. Dishwasher machine according to claim 1, **characterised in that** an aluminium- and/or silicon-oxide-containing, reversibly dehydratable, material, silica gel and/or zeolite, in particular type A, X, Y zeolite, is provided, either singly or in any combination, as the sorption material (ZEO).

3. Dishwasher machine according to one of claims 1 or 2, **characterised in that** the sorption material (ZEO) in the sorption compartment (SB) is in the form of a granular solid or granulate comprising a multiplicity of particles having a grain size substantially between 1 and 6 mm, in particular between 2.4 And 4.8 mm, as a fill, the fill height (H) of the particles corresponding to at least 5 times their grain size.

4. Dishwasher machine according to at least one of the preceding claims,
**characterised in that** the sorption material (ZEO) present as a granular solid or granulate is usefully present in the sorption compartment with a fill height (H) in the direction of gravity which corresponds to substantially 5 to 40 times, in particular 10 to 15 times the particle size of the granular solid or granulate.

5. Dishwasher machine according to at least one of the preceding claims,
**characterised in that** the fill height (H) of the sorption material (ZEO) is chosen so as to be substantially between 1.5 and 25 cm, in particular between 2 and 8 cm, preferably between 4 and 6 cm.

6. Dishwasher machine according to at least one of the preceding claims,
**characterised in that** the granular solid or granulate is preferably composed of a multiplicity of substantially spherical particles.

7. Dishwasher machine according to at least one of the preceding claims,
**characterised in that** the sorption material (ZEO) embodied as a granular solid or granulate has an average fill density of at least 500 kg/m³, in particular substantially between 500 and 800 kg/m³, in particular between 600 and 700 kg/m³, in particular between 630 and 650 kg/m³, in particular preferably of approximately 640 kg/m³.

8. Dishwasher machine according to at least one of the preceding claims,
**characterised in that**, in the sorption compartment (SB), the reversibly dehydratable sorption material (ZEO) for absorbing a quantity of moisture transported in the air flow (LS1) is provided in a quantity by weight such that the quantity of moisture absorbed by the sorption material (ZEO) is lower than a quantity of moisture applied to the items to be washed, in particular a quantity of moisture applied in the final rinsing step.

9. Dishwasher machine according to at least one of the preceding claims,
**characterised in that**, in the sorption compartment (SB), the reversibly dehydratable sorption material is provided in a quantity by weight such that this is sufficient to absorb a quantity of moisture which corresponds substantially to a wetting quantity with which the items to be washed are wetted after the end of a final rinsing step.

10. Dishwasher machine according to at least one of the preceding claims,
**characterised in that** the absorbed quantity of water corresponds to between 4 and 25%, in particular between 5 and 15%, of the quantity of liquid applied to the items to be washed.

11. Dishwasher machine according to at least one of the preceding claims,
**characterised in that** an amount by weight of sorption material (ZEO) of substantially between 0.2 and 5 kg, in particular between 0.3 and 3 kg, preferably between 0.2 and 2.5 kg is accommodated in the sorption compartment (SB).

12. Dishwasher machine according to at least one of the preceding claims,
**characterised in that** the sorption material (ZEO) has pores of substantially between 1 and 12 Angstroms, in particular between 2 and 10, preferably between 3 and 8 Angstroms, in size.

13. Dishwasher machine according to at least one of the preceding claims,
**characterised in that** the sorption material (ZEO) has a water absorption capacity of substantially between 15 and 40 per cent, preferably between 20 and 30 per cent of its dry weight.

14. Dishwasher machine according to at least one of the preceding claims,
**characterised in that** a sorption material (ZEO) is provided which can be desorbed at a temperature substantially in the range between 80° and 450°C, in particular between 220°C and 250°C.

15. Dishwasher machine according to at least one of the preceding claims,
**characterised in that** the air-guiding channel (LK), the sorption compartment (SB), and/or one or more additional flow-influencing elements (LT, SK) are embodied such that an air flow (LS2) can be effected through the sorption material (ZEO) for the sorption and/or desorption thereof with a volume flow of substantially between 2 and 15 1/sec, in particular between 4 and 7 1/sec.

16. Dishwasher machine according to at least one of the preceding claims,
**characterised in that** at least one heating device (HZ) is assigned to the sorption material (ZEO), by means of which heating device an equivalent heat output of between 250 and 2500 W, in particular between 1000 and 1800 W, preferably between 1200 and 1500 W can be provided for heating the sorption material (ZEO) for the desorption thereof.

17. Dishwasher machine according to at least one of the preceding claims,
**characterised in that** the ratio of heat output of at least one heating device which is assigned to the sorption material (ZEO) for the desorption thereof and air volume flow (LS2) of the air flow which flows through the sorption material is chosen so as to be between 100 and 1250 W sec/1, in particular between 100 and 450 W sec/1, preferably between 200 and 230 W sec/1.

18. Dishwasher machine according to at least one of the preceding claims,
**characterised in that**, in the sorption compartment (SB), a through-flow cross-sectional area for the sorption material (ZEO) of substantially between 80 and 800 cm², in particular between 150 and 500 cm², is provided.

19. Dishwasher machine according to at least one of the preceding claims,
**characterised in that** the fill height (H) of the sorption material (ZEO) via the inlet cross-sectional area (SDF) of the sorption compartment (SB) is substantially constant.

20. Dishwasher machine according to at least one of the preceding claims,
**characterised in that** the sorption compartment (SB) is arranged in a base module (BG) underneath the base (BO) of the washing compartment (SPB).

21. Dishwasher machine according to at least one of the preceding claims,
**characterised in that** the air guidance channel (LK) is arranged largely outside the washing compartment (SPB).

22. Dishwasher machine according to at least one of the preceding claims,
**characterised in that**, viewed in the direction of flow upstream of the sorption compartment (SB) at least one fan unit (LT) is inserted into the inlet-side tube portion (RA1) of the air guidance channel (LK) to generate a forced air flow (LS1) in the direction of at least one entry opening (EO) of the sorption compartment (SB).

23. Dishwasher machine according to claim 22, **characterised in that** the fan unit (LT) is arranged in the base module (BG) underneath the washing compartment (SPB).

24. Dishwasher machine according to at least one of the preceding claims,
**characterised in that**
the air guidance channel (LK) is coupled to the sorption compartment (SB) such that the air flow (LS1) comes out in the area of the sorption compartment (SB) close to the base with an inflow direction (ESR) and changes into a through flow direction (DSR) different therefrom, with which it flows through the interior of the sorption compartment (SB).

25. Dishwasher machine according to at least one of the preceding claims,
**characterised in that** the inlet-side tube portion (RA1) of the air guidance channel (LK) opens out into the sorption compartment (SB) such that its inflow direction (ESR) is diverted into the through flow direction (DSR) of the sorption compartment (SB), especially by approximately 90°.

26. Dishwasher machine according to at least one of the preceding claims,
**characterised in that** the through-flow cross-sectional area (SDF) for the sorption material (ZEO) in the interior of the sorption compartment (SB) is embodied so as to be greater than the passage cross-sectional area of the inlet connecting piece (ES) of the air-guiding channel (LK) with which said air-guiding channel opens into the inlet opening (EO) of the sorption compartment (SB).

27. Dishwasher machine according to at least one of the preceding claims,
**characterised in that**
the through-flow cross-sectional area (SDF) of the sorption compartment SB is embodied so as to be between 2 and 40 times, in particular between 4 and 30 times, preferably between 5 and 25 times, greater than the passage cross-sectional area of the inlet connecting piece (ES) on the end of the air-guiding channel (LK) with which said air-guiding channel opens into the inlet opening (EO) of the sorption compartment (SB).

28. Dishwasher machine according to at least one of the preceding claims,
**characterised in that**
at least one sorption unit (SE) comprising sorption material (ZEO) is accommodated in the sorption compartment such that air (LS1, LS2) can flow through the sorption material (ZEO) substantially in or against the direction of gravity, said air being guided out of the washing compartment (SPB) into the sorption compartment (SB) via the air-guiding channel (LK).

29. Dishwasher machine according to at least one of the preceding claims,
**characterised in that**
the sorption unit (SE) comprises at least one lower sieve element or grid element (US) and at least one upper sieve element or grid element (OS) at a predefinable vertical distance (H) from one another and that the spatial volume between the two sieve elements or grid elements (US, OS) is largely completely filled with the sorption material (ZEO).

30. Dishwasher machine according to at least one of the preceding claims,
**characterised in that**,
viewed against the direction of gravity, the sorption compartment (SB) has at least one layer comprising a space (ZR) arranged downstream from a heating device (HZ) and a subsequent sorption unit (SE).

31. Dishwasher machine according to at least one of the preceding claims,
**characterised in that**
the sorption compartment (SB) has at least one heating device (HZ) in its lower cavity (UH) close to its base.

32. Dishwasher machine according to at least one of the preceding claims,
**characterised in that**
the sorption material in the sorption compartment (SB) is embodied so as to absorb a quantity of water of substantially between 150 and 400 ml, in particular between 200 and 300 ml.

## Revendications

1. Lave-vaisselle (GS), en particulier lave-vaisselle ménager, avec au moins une cuve de lavage (SPB) et au moins un système de séchage par sorption (TS) pour sécher la vaisselle, dans lequel le système de séchage par sorption (TS) présente au moins un réservoir de sorption (SB) avec du matériau de sorption désydrogénable réversible (ZEO), relié avec la cuve de lavage (SPB) via au moins un canal de guidage d'air (LK) afin de gérer un écoulement d'air (LS 1), dans lequel le matériau de sorption (ZEO) est stocké sous la forme d'une unité de sorption (SE) dans le réservoir de sorption (SB) de telle manière que sensiblement chaque point d'entrée de la surface de la section transversale de passage (SDF) de l'unité de sorption (SE) soit soumise à un débit volumique d'air sensiblement égal, et dans lequel au moins un dispositif de chauffage (HZ) est prévu dans le sens de traversée (DSR) du réservoir de sorption (SB) avant son unité de sorption (SE), **caractérisé en ce qu'**un ou plusieurs éléments de conditionnement de l'écoulement (SK) sont prévus dans le réservoir de sorption (SB) et/ou une partie de conduit côté entrée (VA, ES) du canal de guidage d'air (LK) de telle manière à produire une homogénéisation du profil de section d'écoulement de l'écoulement d'air (LS2) lors de la traversée du réservoir de sorption (SB) dans son sens de traversée (DSR), dans lequel au moins un élément de conditionnement de l'écoulement (SK) est prévu avec une différence de hauteur par rapport au dispositif de chauffage (HZ) dans le sens de traversée (DSR) du réservoir de sorption (SB) dans son creux inférieur (UH), et dans lequel des passages d'air, en particulier des fentes (SL), sont exécutés selon une taille plus importante dans l'élément de conditionnement de l'écoulement (SK) aux endroits auxquels l'écoulement d'air (LS1) entrant dans le réservoir de sorption (SB) dans le sens de traversée (DSR) du réservoir de sorption (SB) présente une vitesse moindre qu'aux endroits auxquels l'écoulement d'air (LS1) entrant dans le réservoir de sorption (SB) dans le sens de traversée (DSR) du réservoir de sorption (SB) présente une vitesse plus importante.

2. Lave-vaisselle selon la revendication 1, **caractérisé en ce qu'**un matériau déshydrogénable réversible contenant un oxyde d'aluminium et/ou de silicium, un gel de silice et/ou de la zéolithe, en particulier de la zéolithe de type A, X, Y seule ou en combinaison quelconque est utilisé(e) comme matériau de sorption (ZEO).

3. Lave-vaisselle selon l'une des revendications 1 ou 2, **caractérisé en ce que** le matériau de sorption (ZEO) est prévu dans le réservoir de sorption (SB) sous la forme d'une matière solide granuleuse ou d'un granulat avec une pluralité de corps de particules dont la taille des grains varie essentiellement entre 1 et 6 mm, en particulier entre 2,4 et 4,8 mm, sous forme de remplissage, et **en ce que** la hauteur (H) des corps de particules correspond au moins au quintuple de la taille de leurs grains.

4. Lave-vaisselle selon au moins une des revendications précédentes, **caractérisé en ce que** le matériau de sorption (ZEO) présent sous forme de matière solide granuleuse ou de granulat se trouve dans le sens de la pesanteur dans le réservoir de sorptions (SB) selon une hauteur (H) qui correspond essentiellement à 5 à 40 fois, en particulier à 10 à 15 fois la taille des particules de la matière solide granuleuse ou du granulat.

5. Lave-vaisselle selon au moins une des revendications précédentes, **caractérisé en ce que** la hauteur (H) du matériau de sorption (ZEO) est essentiellement sélectionnée entre 1,5 et 25 cm, en particulier entre 2 et 8 cm, de préférence entre 4 et 6 cm.

6. Lave-vaisselle selon au moins une des revendications précédentes, **caractérisé en ce que** la matière solide granuleuse ou le granulat est constitué(e) par une pluralité de corps de particules essentiellement sphériques.

7. Lave-vaisselle selon au moins une des revendications précédentes, **caractérisé en ce que** le matériau de sorption exécuté sous forme de matière solide granuleuse ou de granulat (ZEO) présente une densité en vrac moyenne minimale de 500 kg/m³, en particulier essentiellement entre 500 et 800 kg/m³, en particulier 600 et 700 kg/m³, en particulier entre 630 et 650 kg/m³, en particulier de préférence d'environ 640 kg/m³.

8. Lave-vaisselle selon au moins une des revendications précédentes, **caractérisé en ce que** dans le réservoir de sorptions (SB), le matériau déshydrogénable réversible (ZEO) est prévu afin d'absorber une quantité d'humidité transportée dans l'écoulement d'air (LS1) selon une quantité pondérale telle que la quantité d'humidité absorbée par le matériau de sorption (ZEO) est moins importante qu'une quantité de fluide déversée sur la vaisselle, en particulier une quantité de fluide déversée durant l'étape de rinçage.

9. Lave-vaisselle selon au moins une des revendications précédentes, **caractérisé en ce que** dans le réservoir de sorption (SB), le matériau déshydrogénable réversible est prévu selon une quantité pondérale telle qu'elle suffit afin d'absorber une quantité d'humidité correspondant essentiellement à une quantité de mouillage déversée sur la vaisselle au terme d'une étape de rinçage.

10. Lave-vaisselle selon au moins une des revendications précédentes, **caractérisé en ce que** la quantité d'eau absorbée varie entre 4 et 25 %, en particulier entre 5 et 15 % de la quantité de fluide déversée sur la vaisselle.

11. Lave-vaisselle selon au moins une des revendications précédentes, **caractérisé en ce qu'**une quantité pondérale essentiellement située entre 0,2 et 5 kg, en particulier entre 0,3 et 3 kg, de préférence entre 0,5 et 2,5 kg de matériau de sorption (ZEO) est logée dans le réservoir de sorption.

12. Lave-vaisselle selon au moins une des revendications précédentes, **caractérisé en ce que** le matériau de sorption (ZEO) présente des pores dont la taille varie essentiellement entre 1 et 12 Angström, en particulier entre 2 et 10, de préférence entre 3 et 8 Angström.

13. Lave-vaisselle selon au moins une des revendications précédentes, **caractérisé en ce que** le matériau de sorption (ZEO) présente une capacité d'absorption d'eau essentiellement située entre 15 et 40, de préférence entre 20 et 30 pour cent en poids de son poids à sec.

14. Lave-vaisselle selon au moins une des revendications précédentes, **caractérisé en ce qu'**un matériau de sorption (ZEO) déshydrogénable à une température essentiellement située dans la plage de 80° à 450°C, en particulier de 220° à 250°C, est prévu.

15. Lave-vaisselle selon au moins une des revendications précédentes, **caractérisé en ce que** le canal de guidage d'air (LK), le réservoir de sorption (SB) et/ou un ou plusieurs éléments d'influence de l'écoulement supplémentaires (LT, SK) sont exécutés de telle manière qu'un écoulement d'air (LS2) dont le débit volumique se situe essentiellement entre 2 et 15 I/sec, en particulier entre 4 et 7 I/sec peut être produit à travers le matériau de sorption (ZEO) pour sa sorption et/ou sa désorption.

16. Lave-vaisselle selon au moins une des revendications précédentes, **caractérisé en ce qu'**au moins un dispositif de chauffage (HZ) permettant de fournir une puissance de chauffage équivalente entre 250 et 2500 W, en particulier entre 1000 et 1800 W, de préférence entre 1200 et 1500 W, pour chauffer le matériau de sorption (ZEO) en vue de sa désorption est affecté au matériau de sorption (ZEO).

17. Lave-vaisselle selon au moins une des revendications précédentes, **caractérisé en ce que** le rapport entre la puissance de chauffage d'au moins un dispositif de chauffage (HZ) affecté au matériau de sorption (ZEO) pour sa désorption et le débit volumique d'air de l'écoulement d'air (LS2) qui traverse le matériau de sorption est sélectionné entre 100 et 1250 W sec/l, en particulier entre 100 et 450 W sec/l, de préférence entre 200 et 230 W sec/l.

18. Lave-vaisselle selon au moins une des revendications précédentes, **caractérisé en ce qu'**une section transversale de passage essentiellement située entre 80 et 800 cm², en particulier entre 150 et 500 cm² est prévue pour le matériau de sorption (ZEO) dans le réservoir de sorption (SB).

19. Lave-vaisselle selon au moins une des revendications précédentes, **caractérisé en ce que** la hauteur (H) du matériau de sorption (ZEO) est essentiellement constante sur la section transversale d'entrée (SDF) de l'unité de sorption (SE) du réservoir de sorptions (SB).

20. Lave-vaisselle selon au moins une des revendications précédentes, **caractérisé en ce que** le réservoir de sorption (SB) est logé dans un module au sol (BG) en-dessous du fond de la cuve de lavage (SPB).

21. Lave-vaisselle selon au moins une des revendications précédentes, **caractérisé en ce que** le canal de guidage d'air (LK) est largement disposé en dehors de la cuve de lavage (SPB).

22. Lave-vaisselle selon au moins une des revendications précédentes, **caractérisé en ce que**, dans le sens d'écoulement, avant le réservoir de sorption (SB), au moins une unité de ventilateur (L T) est insérée dans la partie de conduit côté entrée (RA 1) du canal de guidage d'air (LK) afin de générer un écoulement d'air forcé (LS 1) vers l'au moins un orifice d'entrée (EO) du réservoir de sorption (SB).

23. Lave-vaisselle selon la revendication 22, **caractérisé en ce que** l'unité de ventilateur (LT) est disposée dans le module au sol (BG) sous la cuve de lavage (SPB).

24. Lave-vaisselle selon au moins une des revendications précédentes, **caractérisé en ce que** le canal de guidage d'air (LK) est couplé avec le réservoir de sorption (SB) de telle manière que l'écoulement d'air (LS1) débouche dans la zone proche du sol du réservoir de sorption (SB) selon un sens d'écoulement à l'entrée (ESR) et passe dans un sens de traversée (DSR) différent avec lequel il traverse l'intérieur du réservoir de sorption (SB).

25. Lave-vaisselle selon au moins une des revendications précédentes, **caractérisé en ce que** la partie de conduit côté entrée (RA 1) du canal de guidage d'air (LK) débouche dans le canal de sorption (SB) de telle manière que son sens d'écoulement à l'entrée (ESR) est dévié dans le sens de traversée (DSR) du réservoir de sorption (SB), en particulier d'environ 90°.

26. Lave-vaisselle selon au moins une des revendications précédentes, **caractérisé en ce que** la section transversale de passage (SDF) pour le matériau de sorption (ZEO) à l'intérieur du réservoir de sorption (SB) est plus importante que la section transversale de passage du raccord d'entrée (ES) du canal de guidage d'air (LK) via lequel celui-ci débouche dans l'orifice d'entrée (EO) du réservoir de sorption (SB).

27. Lave-vaisselle selon au moins une des revendications précédentes, **caractérisé en ce que** la section transversale de passage (SDF) du réservoir de sorption (SB) est exécutée selon une taille 2 à 40 fois, en particulier 4 à 30 fois, de préférence entre 5 et 25 fois plus grande que la section transversale de passage du raccord d'entrée final (ES) du canal de guidage d'air (LK) via lequel celui-ci débouche dans l'orifice d'entrée (EO) du réservoir de sorption (SB).

28. Lave-vaisselle selon au moins une des revendications précédentes, **caractérisé en ce qu'**au moins une unité de sorption (SE) avec du matériau de sorption (ZEO) est logée de telle manière dans le réservoir de sorption (SB) que le matériau de sorption (ZEO) peut essentiellement être traversé dans le sens de la pesanteur ou dans le sens opposé à la pesanteur par de l'air (LS1, LS2) dirigé via le canal de guidage d'air (LK) dans le réservoir de sorption (SB) au départ de la cuve de lavage (SPB).

29. Lave-vaisselle selon au moins une des revendications précédentes, **caractérisé en ce que** l'unité de sorption (SE) présente au moins un élément filtrant ou à treillis inférieur (US) et au moins un élément filtrant ou à treillis supérieur (OS) disposés selon un écart de hauteur prédéterminable (H) et **en ce que** le volume situé entre les deux éléments filtrants ou à treillis (US, OS) est en majeure partie intégralement rempli par le matériau de sorption (ZEO).

30. Lave-vaisselle selon au moins une des revendications précédentes, **caractérisé en ce que** le réservoir de sorption (SB) présente, dans le sens opposé à la pesanteur, au moins une stratification d'un dispositif de chauffage (HZ), un espace intermédiaire disposé en aval (ZR) puis l'unité de sorption (SE).

31. Lave-vaisselle selon au moins une des revendications précédentes, **caractérisé en ce que** le réservoir de sorption (SB) présente, dans son creux inférieur proche du sol (UH) au moins un dispositif de chauffage (HZ).

32. Lave-vaisselle selon au moins une des revendications précédentes, **caractérisé en ce que** le matériau de sorption afin d'absorber une quantité d'eau essentiellement située entre 150 et 400 ml, en particulier entre 200 et 300 ml est exécuté dans le réservoir de sorption (SB).
